# EUROPEAN PATENT APPLICATION

(11) **EP 4 397 804 A1**
(43) Date of publication of application: **10.07.2024**
(21) Application number: 22863556.1
(22) Date of filing: 31.08.2022
(51) Int. Cl.: D06F 58/24

(54) **DRYING APPARATUS AND WASHING AND DRYING INTEGRATED MACHINE**

(30) Priority: 01.09.2021 CN 202111023112; 30.11.2021 CN 202111450553
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); DUAN, Chuanlin, Shenzhen, Guangdong 518000 (CN); YAN, Yadong, Shenzhen, Guangdong 518000 (CN); HUANG, Jibai, Shenzhen, Guangdong 518000 (CN); YANG, Zhimin, Shenzhen, Guangdong 518000 (CN); WANG, Zhe, Shenzhen, Guangdong 518000 (CN); LIU, Ming, Shenzhen, Guangdong 518000 (CN); LIN, Chenghu, Shenzhen, Guangdong 518000 (CN); FANG, Junjun, Shenzhen, Guangdong 518000 (CN); QI, Hang, Shenzhen, Guangdong 518000 (CN); XU, Ming, Shenzhen, Guangdong 518000 (CN); LIU, Tong, Shenzhen, Guangdong 518000 (CN); QUAN, Gang, Shenzhen, Guangdong 518000 (CN)
(74) Representative: Studio Torta S.p.A.
(86) International application number: PCT/CN2022/116387
(87) International publication number: WO 2023/030421

(57) **Abstract**

A drying apparatus and a washing and drying integrated machine. The drying apparatus comprises a circulation module (10) configured to circulate and output humid air from a drum to a dehumidification module (20); the dehumidification module (20) configured to dehumidify and dry the circulated air flow and output same to the drum; a regeneration module (30) configured to output the dried regeneration airflow to the dehumidification module (20) to dehumidify and dry at least part of the dehumidification module (20), so as to restore the dehumidification capacity of the dehumidification module. The circulation module (10), the dehumidification module (20), and the regeneration module (30) of the drying apparatus are roughly in one plane. The drying apparatus are compactly integrated in a standard-sized washing and drying integrated machine. By means of an efficient circulation and dehumidification and regeneration function, dehumidification and drying can be realized continuously and efficiently, and power saving and time saving can be achieved.

## Description

### CROSS-REFERENCE TO RELATED APPLICATION

This application is based on and claims priorities to Chinese Patent Application No. 202111023112.5, filed on September 1, 2021, and Chinese Patent Application No. 202111450553.3, filed on November 30, 2021, the entire contents of which are incorporated herein by reference.

### TECHNICAL FIELD

The present application relates to the field of household appliances, in particular to a drying device and an integrated washer-dryer with washing and drying functions.

### BACKGROUND

With the rising of people's living standard and the continuous development in technology levels and product performances, people have an increasing demand on the functionality of household appliances to meet their increasing requirements in the home, so as to save manpower.

For laundry, one of the most time-consuming physical tasks in the home, its entire process involves washing, airing, tidying and other necessary processes. Since traditional washing machines only have a washing function, the airing, drying, and tidying still need the manpower. Nowadays, an integrated washer-dryer as newly launched in the market integrates the washing and drying functions that can be started and completed with one key, and can thereby dry clothes after the washing is finished, which greatly reduces the manpower cost in drying and tidying.

The drying system of the existing integrated washer-dryer adopts a moisture-absorbing module (evaporator or heat pump) to heat and absorb moisture in the moist air from a drum of the integrated washer-dryer to generate high-temperature air. Then, the high-temperature air re-enters the drum of the integrated washer-dryer to dry and evaporate the moisture in the clothes. However, the overall temperature of the existing evaporator or heat pump is consistent, which decreases the capacity of the moisture-absorbing module in absorbing moisture of the moist air during the evaporation of the moist air, thereby causing low moisture-absorbing efficiency, long drying duration and high power consumption. In particular, in an environment of a low air temperature, the temperature of moist air is also reduced, and a temperature of the evaporator can hardly reach a moisture-absorbing temperature, which in turn causes lower moisture-absorbing efficiency, longer drying duration and higher power consumption. Thus, it is necessary to add circulating and regenerating functions into the moisture-absorbing module to continuously maintain high-temperature and low-humidity characteristics of the moisture-absorbing module to achieve continuous and efficient dehumidification and drying, thereby saving power and time.

In addition, due to the limits in industry standards, the overall size of the integrated washer-dryer is generally fixed. Thus, it is a challenge for the industry to mount more functional components in a limited space under a premise that all the above functions can be implemented.

### SUMMARY

An object of the present application is to provide a highly integrated washer-dryer. In order to solve the above problems in the related art, functions of washing, drying and regenerating and circulating are highly integrated in a space of the washing machine having a limited overall size, and a whole operation process is efficient, time-saving and power-saving, which greatly reduces the working time and energy consumption.

In order to solve the above problem, the present application provides a drying device of an integrated washer-dryer, including a circulating module assembly 10, which is communicated with a drum of the integrated washer-dryer and configured to enable moist air from the drum to form a circulating airflow by circulating movement and output the circulating airflow to a dehumidifying module assembly 20 for dehumidification; the dehumidifying module assembly 20, which is communicated with the circulating module assembly 10 and the drum and configured to dehumidify and dry the circulating airflow from the circulating module assembly 10 by circulating rotational movement and output the dried circulating airflow to the drum; and a regenerating module assembly 30, which is communicated with the dehumidifying module assembly 20 and configured to output a dry regeneration airflow to the dehumidifying module assembly 20 by rotating to dehumidify and dry at least part of the dehumidifying module assembly 20 so as to restore a dehumidifying capacity of the dehumidifying module assembly 20, where the circulating module assembly 10, the dehumidifying module assembly 20 and the regenerating module assembly 30 of the drying device are disposed substantially in one plane.

Optionally, a plane where the drying device is located is disposed horizontally above or below the drum and is parallel to a rotating shaft of the drum.

Optionally, rotating shafts of at least two of the circulating module assembly 10, the dehumidifying module assembly 20 and the regenerating module assembly 30 of the drying device are parallel to each other and are substantially perpendicular to the rotating shaft of the drum.

Optionally, the rotating shafts of the circulating module assembly 10 and the dehumidifying module assembly 20 are configured to be heteroplanar with and perpendicular to the rotating shaft of the drum, and distributed on two sides of the rotating shaft of the drum.

Optionally, the regenerating module assembly 30 is provided on a side of the circulating module assembly 10, and the regenerating module assembly 30 and the dehumidifying module assembly 20 are disposed on two sides of the rotating shaft of the drum, respectively.

Optionally, the drying device further includes an air inlet passage 102, which is communicated with the circulating module assembly 10 and the drum and serves as a passage allowing the moist air from the drum to enter the circulating module assembly 10.

Optionally, when a plane where the drying device is located is disposed horizontally above the drum, the air inlet passage 102 is disposed at a left rear side or right rear side of the drum, and the circulating module assembly 10 communicated with the air inlet passage 102 is accordingly disposed at an upper-left rear side or upper-right rear side of the drum.

Optionally, the drying device further includes an air outlet passage 203, which is communicated with the dehumidifying module assembly 20 and the drum and serves as a passage allowing the dried circulating airflow as dehumidified to enter the drum.

Optionally, when a plane where the drying device is located is disposed horizontally below the drum, the air inlet passage 102 is configured to extend sequentially along a bottom, a rear and a top of the integrated washer-dryer, so as to communicate an air outlet of the drum with an air inlet of a circulating fan 101.

Optionally, when a plane where the drying device is located is disposed horizontally below the drum, the air outlet passage 203 is configured to extend along a bottom, a rear and a top of the integrated washer-dryer, so as to communicate an air outlet of the dehumidifying module assembly 20 with an air inlet of the drum.

Optionally, a plane where the drying device is located is disposed vertically behind the drum and is perpendicular to the rotating shaft of the drum.

Optionally, rotating shafts of the circulating module assembly 10 and the dehumidifying module assembly 20 are parallel to the rotating shaft of the drum and are distributed on two sides of the rotating shaft of the drum; and the regenerating module assembly 30 is provided on a side of the circulating module assembly 10, and the regenerating module assembly 30 and the dehumidifying module assembly 20 are disposed on two sides of the rotating shaft of the drum, respectively.

Optionally, the drying device further includes an air inlet passage 102, which is configured to extend in a direction perpendicular to the rotating shaft of the drum, communicate an air outlet of the drum with an air inlet of the circulating module assembly 10 and serve as a passage allowing the moist air from the drum to enter the circulating module assembly 10.

Optionally, the drying device further includes an air outlet passage 203, which is configured to extend in a direction parallel to the rotating shaft of the drum, communicate an air outlet of the dehumidifying module assembly 20 with an air inlet of the drum, and serve as a passage allowing the dried circulating airflow as dehumidified to enter the drum.

Optionally, a regeneration air inlet 3011 and a regeneration air outlet 3012 of the regenerating module assembly 30 are both communicated with an atmosphere.

Optionally, the drying device further includes a condensing module assembly 40, which is communicated with a regeneration air outlet of the regenerating module assembly 30 and configured to condense a regeneration airflow output from the regenerating module assembly 30 to form a low-temperature and dry airflow.

Optionally, an air outlet of the condensing module assembly 40 is communicated with an atmosphere or a regeneration air inlet 3011 of the regenerating module assembly 30.

Optionally, the drying device further includes a filtering assembly 60, which is provided in the air inlet passage 102 of the circulating module assembly 10 and configured to filter lint and/or impurities in the airflow from the drum.

Optionally, the air inlet passage 102 is configured to pass through a front end of the integrated washer-dryer, and the filtering assembly 60 provided in the air inlet passage 102 is detachably provided on a front-end panel of the integrated washer-dryer.

Optionally, a housing of the drying device is integrally provided with at least one mounting part 509 at corresponding positions on four sides of a frame of the integrated washer-dryer, respectively, and the drying device is rigidly fixed to a cabinet of the integrated washer-dryer via the mounting parts 509.

Optionally, the housing of the drying device is flexibly connected to the drum of the integrated washer-dryer.

Optionally, at least one of the following component connections adopts a flexible connection: a connection between the circulating module assembly 10 and the air inlet passage 102 of the drying device, and/or a connection between the air inlet passage 102 and the drum, and/or a connection between the dehumidifying module assembly 20 and the circulating module assembly 10, and/or a connection between the dehumidifying module assembly 20 and the air outlet passage 203 of the drying device, and/or a connection between the air outlet passage 203 and the drum.

Optionally, the drying device is provided with a packaging housing 50, and the packaging housing includes a lower housing and an upper housing, where the lower housing includes a rotary plate lower-housing 501 for housing the dehumidifying module assembly 20, a circulating lower-housing 502 for housing the circulating module assembly 10, a condensing lower-housing 503 for housing the condensing module assembly 40, and a regenerating lower-housing 504 for housing the regenerating module assembly 30; and the upper housing includes a rotary plate upper-housing 505 for housing the dehumidifying module assembly 20, a circulating upper-housing 506 for housing the circulating module assembly 10, and a condensing upper-housing 507 for housing the condensing module assembly 40, where the respective lower housings are integrally formed as an integral lower housing or separately formed as a plurality of separate lower-housing parts, and the respective upper housings are formed as a plurality of separate upper-housing parts.

Optionally, the rotary plate lower-housing 501 is fixedly and rigidly connected to a frame of a washing machine, and the other lower housings are fixedly and rigidly connected to an outer tub of the drum separately or integrally.

Optionally, the rotary plate lower-housing 501 is flexibly connected to all vibration-generating components.

According to another aspect of the present disclosure, an integrated washer-dryer is further provided and includes a drum for washing and the drying device as mentioned before, where the drying device is communicated with the drum for dehumidifying and drying moist air inside the drum.

The drying device of the present application is compactly integrated in the integrated washer-dryer having a standard size, and can achieve, without increasing the overall size of the integrated washer-dryer, continuous and efficient dehumidification and drying by its closely cooperative cyclic functions of dehumidifying and regenerating, thereby saving electricity and time.

### BRIEF DESCRIPTION OF THE DRAWINGS

For clearer descriptions of technical solutions in embodiments of the present application or the related art, the following briefly introduces accompanying drawings required for describing the embodiments. Apparently, the accompanying drawings in the following description show merely some embodiments of the present application, and persons of ordinary skill in the art can still derive other drawings from these accompanying drawings without creative efforts.
FIG. 1 is a schematic diagram of an overall structure of a drying device of an integrated washer-dryer according to the present application, where FIG. 1a is a top view of an assembly structure of the drying device, FIG. 1b is an exploded structural diagram of components of the drying device, and FIG. 1c is a diagram for a mounting position of the drying device in the integrated washer-dryer;
FIG. 2 is a positional and structural diagram of a drying module assembly of an integrated washer-dryer according to the present application;
FIG. 3 is a schematic positional diagram of an air inlet passage of a drying module assembly;
FIG. 4 is a positional and structural diagram of a drying module assembly of an integrated washer-dryer according to another embodiment of the present application;
FIG. 5 is a positional and structural diagram of a drying module assembly of an integrated washer-dryer according to another embodiment of the present application;
FIG. 6 is a structural diagram of a lower housing of a packaging housing of a drying module assembly according to an embodiment of the present disclosure;
FIG. 7 is a schematic structural diagram of an upper housing of a dehumidifying module assembly according to an embodiment of the present disclosure;
FIG. 8 is a connecting structure between a drying module assembly and a frame of a washing machine according to the present disclosure;
FIG. 9 is a connecting structure between a drying module assembly and a drum of a washing machine according to the present disclosure;
FIG. 10 is a schematic structural diagram of a regenerating module assembly of an integrated washer-dryer according to the present application, where FIG. 10a is an assembly structural diagram of the regenerating module assembly, and FIG. 10b is an exploded structural diagram of the regenerating module assembly;
FIG. 11 is a schematic diagram of a closed-loop regenerating and circulating structure of a regenerating module assembly of an integrated washer-dryer according to the present application;
FIG. 12 is a schematic structural diagram of a regeneration air inlet connector according to an embodiment of the present disclosure, where FIG. 12a is a schematic diagram of a connecting structure of the regeneration air inlet connector, and FIG. 12b is a schematic diagram of an internal structure of the regeneration air inlet connector;
FIG. 13 is a schematic structural diagram of a regeneration air outlet connector according to an embodiment of the present disclosure, where FIG. 13a is a schematic diagram of a connecting structure of the regeneration air outlet connector, and FIG. 13b is a schematic diagram of an internal structure of the regeneration air outlet connector;
FIG. 14 is a schematic diagram of an upper housing assembly of a circulating module assembly of a drying module assembly according to the present disclosure;
FIG. 15 is a schematic diagram of a lower housing assembly of a circulating module assembly of a drying module assembly according to the present disclosure;
FIG. 16 is a schematic diagram of a dehumidifying and circulating process of a circulating module assembly according to an embodiment of the present disclosure;
FIG. 17 is a schematic diagram of a water supplying assembly of an integrated washer-dryer according to the present application;
FIG. 18 is a schematic diagram of connection for an air inlet passage of a drying module assembly of a washing machine according to the present disclosure;
FIG. 19 is a schematic structural diagram of a filtering assembly according to the present disclosure;
FIG. 20 is a schematic structural diagram of a nozzle of a filtering assembly according to the present disclosure;
FIG. 21 is a schematic positional diagram of a nozzle of a filtering assembly according to the present disclosure;
FIG. 22 is a schematic positional diagram of a condensing nozzle of a filtering assembly according to the present disclosure;
FIG. 23 is a schematic structural diagram of a dehumidifying module assembly according to the present disclosure;
FIG. 24 is an exploded structural diagram of a sealing package of a dehumidifying module assembly;
FIG. 25 is a schematic structural diagram of a lower housing of a dehumidifying module assembly according to the present disclosure;
FIG. 26 is a schematic structural diagram of an upper housing of a dehumidifying rotary plate according to the present disclosure;
FIG. 27 is a schematic diagram of an internal structure of a dehumidifying rotary plate of a drying module assembly according to the present disclosure, where FIG. 27a is a schematic diagram of an exploded structure of the dehumidifying rotary plate, and FIG. 27b is a schematic diagram of an assembly structure of the dehumidifying rotary plate;
FIG. 28 is a schematic diagram of a structure where a sealing ring is provided in a rotary plate lower housing;
FIG. 29 is a schematic diagram of a vibration damping structure of the dehumidifying rotary plate;
FIG. 30 is a schematic structural diagram of a peripheral driving device for the dehumidifying rotary plate according to an embodiment of the present disclosure;
FIG. 31 is a schematic structural diagram of a flexible roller of a dehumidifying module assembly according to an embodiment of the present disclosure;
FIG. 32 is a schematic structural diagram of an auxiliary roller of a dehumidifying module assembly according to an embodiment of the present disclosure;
FIG. 33 is a schematic diagram of a sealing structure of a heating module of a drying module assembly according to the present disclosure;
FIG. 34 is a schematic structural diagram of a mesh plate of a heating module of a drying module assembly according to the present disclosure, where FIG. 34a is a schematic structural diagram of a mesh plate serving as an air outlet of the heating module, and FIG. 34b is a schematic structural diagram of an air inlet of the heating module;
FIG. 35 is a schematic structural diagram of a heater of a heating module of a drying module assembly according to the present disclosure, where FIG. 35a is a schematic diagram of relative positions of the heater and the mesh plate, and FIG. 35b is a schematic diagram of a layout structure of the heater;
FIG. 36 is a schematic diagram of a housing of a condensing module assembly of a drying device according to the present disclosure; and
FIG. 37 is a schematic diagram of a flow spoiling member of a condenser according to a preferred embodiment, where FIG. 37a is a housing structure of a condenser having no flow spoiling structure, and FIG. 37b is a housing structure of a condenser having a flow spoiling structure.

The correspondence between reference signs and the components in respective accompanying drawings is as follows:
Integrated washer-dryer: drum A, drying module assembly B, water supplying assembly C, frame side 1 of washing machine;
Drying device B: circulating module assembly 10, dehumidifying module assembly 20, regenerating module assembly 30, condensing module assembly 40;
Water supplying assembly C: one water inlet C0, a plurality of water supplying ports (drum water supplying port C1, filter screen water supplying port C2, condenser water supplying port C3), one water outlet C4;
Circulating module assembly 10: circulating fan 101, air inlet passage 102, circulating air interface 103, circulating fan sealing strip 104, corrugated pipe 1021, pressing plate 1022;
Circulating fan 101: motor 1011, impeller 1012;
Circulating fan upper housing 506, circulating fan lower housing 502, circulating fan mounting region 502' of lower housing of drying module assembly;
Dehumidifying module assembly 20: dehumidifying rotary plate 200, dehumidifying part 201, regenerating part 202, air outlet passage 203, housing sealing ring 206, rotary plate lower housing 501, rotary plate upper housing 505, peripheral driving device 207, central driving device 208;
Dehumidifying part 201: lower housing dehumidifying region separator 501-2;
Regenerating part 202: upper housing regenerating region assembling part 202-3, lower housing regenerating region assembling part 202-2;
Rotary plate lower housing 501: lower housing regenerating region separator 501-1, lower housing dehumidifying region separator 501-2, rotating shaft 501-3;
Rotary plate upper housing 505: upper housing dehumidifying region 505-1, upper housing regenerating region 505-2, upper housing regenerating region separator 505-3, circulating air outlet 505-4;
Dehumidifying rotary plate 200: molecular sieve 200-1, driving wheel 200-2, auxiliary rotating ring 200-3, flexible roller 200-4, rotary plate sealing ring 200-5, circumferential vibration damping member 200-6, central vibration damping member 200-7, auxiliary roller 200-8;
Peripheral driving device 207: peripheral driving motor 207-1, peripheral transmission gear 207-2;
Central driving device 208: central driving motor 208-1, central transmission shaft 208-2;
Regenerating module assembly 30: regenerating fan 301, heating module 302, regeneration air inlet 3011, regeneration air outlet 3012;
Regeneration air inlet connector 3013: upper and lower parts 3013-1 and 3013-2, horizontal port 3013-3, vertical port 3013-4;
Regeneration air outlet connector 3014: upper and lower parts 3014-1 and 3014-2, relatively small port 3014-3, relatively large port 3014-4;
Heating module 302: heater air inlet port 302-1, heater air outlet port 302-2, first sealing member 302-3, second sealing member 302-4;
Mesh plate 303, heating tube 304, thermostat 305, heat-conducting sheet 305-1;
Condensing module assembly 40: condenser 401, condenser upper housing 402, condenser lower housing 403, sealing member 404, condenser air inlet 405, condenser air outlet 406, flow spoiling member 407;
Cooling water inlet 401-1, cooling water outlet 401-2, condensate water outlet 401-3;
Packaging housing 50:
Lower housing: rotary plate lower housing 501, circulating fan lower housing 502, condensing lower housing 503, regenerating lower housing 504, mounting part 509;
Rotary plate mounting region 501', circulating fan mounting region 502', condensing mounting region 503', regenerating mounting region 504';
Upper housing: rotary plate upper housing 505, circulating fan upper housing 506, condensing upper housing 507;
Filtering assembly 60: filter screen 601, cleaning nozzle 602, nozzle water supplying pipe 603, condensing nozzle 605, filtering surface 6011, non-filtering surface 6012; and
Nozzle 602: connecting part 6021, extending part 6022.

### DETAILED DESCRIPTION

Embodiments of a drying device of an integrated washer-dryer according to the present application will be described in detail below in combination with accompanying drawings.

In order to make objects, technical solutions and advantages of the present application clearer, the present application will be described in detail below with reference to specific embodiments and the accompanying drawings. It should be understood, however, that these descriptions are only exemplary and are not intended to limit the scope of the present application. In addition, descriptions of well-known structures and techniques will be omitted in the following description to avoid unnecessary obscuring of concepts of the present application.

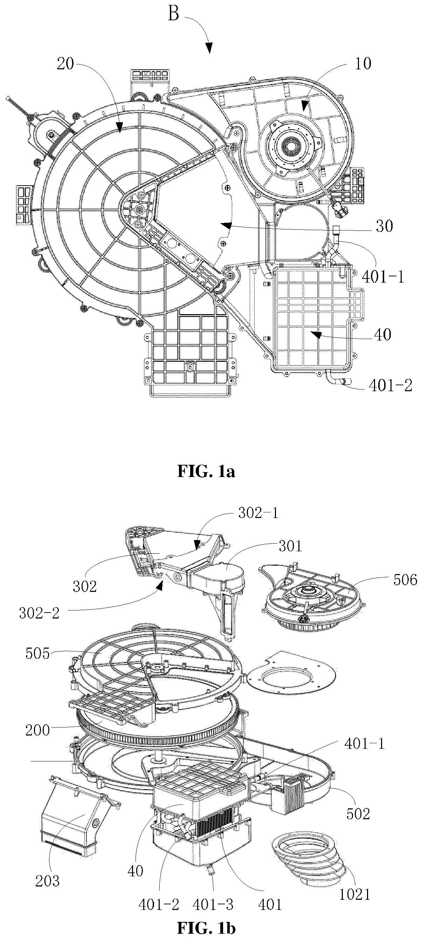

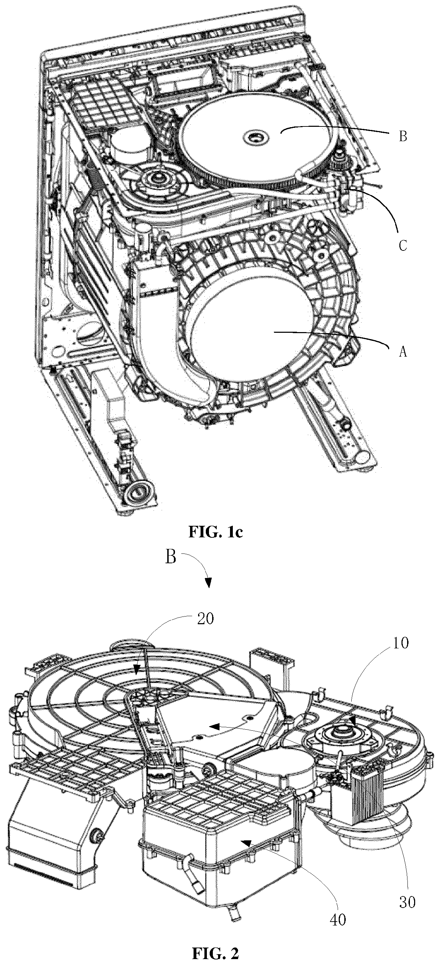

FIG. 1 is a schematic diagram of an overall structure of a drying device of an integrated washer-dryer according to the present application.

As shown in FIG. 1, the integrated washer-dryer of the present application mainly includes a drum A for washing, a drying device B for generating drying airflow, and a water supplying assembly C for realizing water supply and drainage.

The drum A includes an inner tub and an outer tub; and the inner tub is in transmission connection with a drive part, such that the inner tub is driven to rotate for achieving a laundry washing function.

The drying device B sequentially includes the following functional module assemblies: a circulating module assembly 10, a dehumidifying module assembly 20 and a regenerating module assembly 30. In a preferred embodiment, the drying device B is further provided with a condensing module assembly 40 and a filtering assembly 60.

Preferably, at least the circulating module assembly 10, the dehumidifying module assembly 20 and the regenerating module assembly 30 are provided substantially in one plane to minimize an overall thickness of the drying device B, thereby saving the internal space of the integrated washer-dryer. In a case where the condensing module assembly 40 is provided, the condensing module assembly 40 is also preferably provided in the plane where the dehumidifying module assembly 20 and the regenerating module assembly 30 are disposed. However, the present disclosure is not limited to this, and the condensing module assembly 40 may also be heteroplanar with the regenerating module assembly 30 when the space of the integrated washer-dryer allows.

The water supplying assembly C of the integrated washer-dryer includes one water inlet C0, a plurality of water supplying ports (e.g., a drum water supplying port C1, a filter screen water supplying port C2 for cleaning a filter screen, a condenser water supplying port C3, and the like), and one water outlet C4. The water inlet C0 is communicated with an external water source, such that water from the external water source is supplied to the integrated washer-dryer as a whole, where the water supplying includes supplying water to the drum for washing, supplying water to the filter screen for self-cleaning and supplying water to the condenser for condensing. The water outlet C4 is communicated with the external space for discharging wastewater generated by the integrated washer-dryer to the outside of a machine body.

The following is a specific description about the composition structure of the drying device B.

The circulating module assembly 10 includes a circulating fan 101, an air inlet passage 102 and a circulating air interface 103, and is configured to suck moist air from a drum of a washing machine to form a circulating airflow and output the same to the dehumidifying module assembly 20 for dehumidification, and enable a dry air having moisture therein removed to return to the drum of the washing machine. The air inlet passage 102 is communicated with the drum A and the circulating fan 101, respectively, such that the moist air in the drum A of the integrated washer-dryer enters the circulating fan 101.

The circulating fan 101 generates the circulating airflow by rotating, and the circulating airflow is fed to the dehumidifying module assembly 20 via the circulating air interface 103 for dehumidifying operations. In an embodiment, the circulating fan 101 is preferably provided in a horizontal direction, such that a moist airflow from the drum A below is transformed into a circulating airflow horizontally oriented and fed into the dehumidifying module assembly 20 horizontally provided.

Preferably, a filtering assembly is provided at an upstream of the circulating fan 101, and is configured to filter lint and impurities entering the dehumidifying module assembly 20. For example, the filtering assembly may be provided in the inlet air passage 102, or in the air outlet passage of the drum of the washing machine.

The circulating air interface 103 is provided between the circulating fan 101 and the dehumidifying module assembly 20, and is configured to communicate the circulating fan 101 with the dehumidifying module assembly 20 and form a circulating air duct between them.

The dehumidifying module assembly 20 includes a dehumidifying rotary plate 200 and an air outlet passage 203, and further includes a dehumidifying part 201 and a regenerating part 202.

The dehumidifying rotary plate 200 may be formed as a rotating rotary plate (disc-shaped) or a rotating ring (circular-shaped) or formed as a planar structure being capable of reciprocating. The dehumidifying rotary plate 200 is formed by a material that can absorb moisture, and is configured to fully absorb moisture of the circulating airflow to turn the circulating airflow as a dry airflow.

The dehumidifying module assembly 20 may be divided into at least two parts according to its function, i.e., a dehumidifying part 201 and a regenerating part 202, and the two parts are both sector-shaped and form a disc or ring shape after being combined together. In an embodiment, preferably, the dehumidifying part 201 has a greater sector area than the regenerating part 202, such that more regions can be used to absorb moisture of the circulating airflow. A cooling cushion part may also be provided between the dehumidifying part 201 and the regenerating part 202, and is configured to cool part of the rotary plate heated by the regenerating part before the rotary plate enters the dehumidifying part, such that the moisture-absorbing efficiency is further improved.

The dehumidifying part 201 is communicated with the circulating fan 101 via the circulating air interface 103 to receive a moist circulating airflow from the circulating fan 101. The dehumidifying rotary plate 200 absorbs moisture of the circulating airflow via the dehumidifying part 201 to dry the circulating airflow; whereas the dehumidifying rotary plate 200 itself becomes moist due to the moisture absorption.

The region where the regenerating part 202 is located is preferably provided with a heating module that heats and dries the dehumidifying rotary plate 200 to remove its moisture, and a high-temperature and high-humidity airflow is generated. While the dehumidifying rotary plate 200 is moved to the regenerating part 202 after it absorbs a large amount of water at the dehumidifying part 201, the dehumidifying rotary plate 200 is heated and dried to remove its moisture, such that the dehumidifying rotary plate 200 becomes dry, and can better absorb the moisture in the circulating airflow while rotating to the dehumidifying part 201. Thus, the regenerating part 202 can enable the dehumidifying rotary plate 200 to regenerate and restore its moisture-absorbing function.

As described above, the dehumidifying rotary plate 200 allows the circulating airflow to pass through, the dehumidifying rotary plate 200 at the dehumidifying part 201 absorbs the moisture of the circulating airflow from the circulating fan 101; after the dehumidifying rotary plate 200 moves to the regenerating part 202, the moisture absorbed by the dehumidifying rotary plate 200 at the dehumidifying part 201 is removed, such that the dehumidifying rotary plate 200 can continuously maintain a dry state, thereby continuously absorbing the moisture in the circulating airflow.

The air outlet passage 203 is disposed on an outer side of the dehumidifying module assembly 20, provided to communicate the dehumidifying module assembly 20 with the drum A, and configured to enable the dry circulating airflow as dehumidified to flow to the drum A for drying clothes in the drum A.

Optionally, a humidity detecting device may be provided at the dehumidifying part and/or the air outlet passage or other aforementioned locations to detect air humidity at these locations and send the air humidity to the control device, such that rotating velocities and air velocities of the circulating fan, dehumidifying rotary plate, and/or regenerating fan can be controlled via the control device.

The regenerating module assembly 30 includes a regenerating fan 301 and a heating module 302. The regenerating module assembly 30 is configured to be communicated with the regenerating part 202 of the dehumidifying module assembly 20 to remove moisture of the dehumidifying rotary plate 200 in the region where the regenerating part 202 is located, such that the dehumidifying rotary plate 200 returns to a dry state and a high-temperature and high-humidity airflow is generated. Further, the regenerating module assembly 30 generates a regeneration airflow to take away and discharge the high-temperature and high-humidity airflow generated by the regenerating part 202, and a dry airflow having a low humidity is fed into the regenerating part 202 to continuously remove the moisture from the dehumidifying rotary plate 200 in the region of the regenerating part 202, thereby restoring the moisture-absorbing function of the dehumidifying rotary plate 200.

Optionally, the drying device B is further provided with a condensing module assembly 40 at the downstream of the regenerating module assembly 30. The condensing module assembly 40 is communicated with a regeneration air outlet of the regenerating module assembly 30 to condense the high-temperature and high-humidity regeneration airflow from the regeneration air outlet to form and then discharge a low-temperature and dry airflow to the atmosphere via the air outlet of the condensing module assembly 40, such that adverse effects on the atmospheric temperature and humidity of the space where the integrated washer-dryer is located can be avoided. Or, preferably, the air outlet of the condensing module assembly 40 is communicated with the regeneration air inlet of the regenerating module assembly 30 to deliver the generated low-temperature and dry airflow to the regenerating fan 301, such that the airflow enters the regenerating module assembly 30 again for regeneration and circulating.

In an optional embodiment of the present disclosure, a filtering assembly 60 is provided at the upstream of an air intaking location of the circulating fan 101 and is preferably provided in the air inlet passage 102 to filter lint and impurities in the airflow flowing from the drum to the dehumidifying module assembly 20. Thus, the lint or impurities are prevented from entering the dehumidifying module assembly 20, especially from entering the dehumidifying rotary plate 200; otherwise, the lint or impurities block the dehumidifying rotary plate 200, which affects the dehumidifying effect. Further, if the lint adhered to the dehumidifying rotary plate 200 is brought into the regenerating part during the rotation process, the lint may be easily ignited because the regenerating part has a heating module.

In the present disclosure, optionally, the dehumidifying rotary plate may also be formed as a cylinder structure, namely, a dehumidifying cylinder, and accordingly, the rotary plate housing is also formed as a cylinder structure. In this case, the circulating module assembly and the regenerating module assembly are provided in various ways. For example, the circulating module assembly and the regenerating module assembly are provided on inner and outer sides of the dehumidifying cylinder, respectively, or the circulating module assembly and the regenerating module assembly are both provided on the inner or outer side of the dehumidifying cylinder.

Following is a detailed description by taking an embodiment where the circulating module assembly and the regenerating module assembly are provided on inner and outer sides of the dehumidifying cylinder, respectively, as an example.

The circulating module assembly is provided inside the dehumidifying cylinder, the entire dehumidifying module assembly sleeves the periphery of the circulating fan, and an air inlet of the circulating fan is communicated with the drum of the washing machine, such that the dehumidifying cylinder dehumidifies the moist airflow from the drum of the washing machine. The inner wall of the dehumidifying cylinder intakes the moist air from the circulating fan, and the air dehumidified and dried by the dehumidifying cylinder is discharged via the outer wall of the dehumidifying cylinder. Accordingly, the regenerating module assembly is provided on the periphery of the dehumidifying cylinder to dry and dehumidify an outer region of the dehumidifying cylinder, such that the dehumidifying capacity is regenerated and restored. In this case, an inner region of the dehumidifying cylinder is formed as a dehumidifying part, and the outer region of the dehumidifying cylinder is formed as a regenerating part. Accordingly, a circulating path of the dehumidification and circulating is as follows: the drum-the circulating fan-the interior of the dehumidifying cylinder-the outer wall of the dehumidifying cylinder.

Optionally, the circulating may also be implemented in accordance with a path opposite the above path. That is, the circulating module assembly is provided on the periphery of the dehumidifying cylinder, and the regenerating module assembly is provided in the dehumidifying cylinder. Accordingly, a circulating path of the dehumidification and circulating is as follows: the drum-the circulating fan-the outer wall of the dehumidifying cylinder-the interior of the dehumidifying cylinder.

FIG. 2 is a positional and structural diagram of a drying module assembly of the integrated washer-dryer according to the present application.

As shown in FIG. 2, in a preferred embodiment of the present disclosure, the drying device B is provided above the washing drum of the integrated washer-dryer.

As previously described, at least two of the circulating module assembly 10, the dehumidifying module assembly 20 and the regenerating module assembly 30 in the drying device B are provided substantially in one plane, i.e., a plane parallel to the rotating shaft of the drum. In this preferred embodiment, in order to minimize the height of the washing machine, the drying device B is provided horizontally above the drum of the integrated washer-dryer. That is, at least the rotating shaft of the circulating module assembly 10, the rotating shaft of the dehumidifying module assembly 20, and the rotating shaft of the regenerating module assembly 30 in the drying device B are parallel to each other and perpendicular to the upper housing of the washing machine or the rotating shaft of the drum of the integrated washer-dryer.

In this case, the overall height of the integrated washer-dryer depends on the diameter of the drum and the thickness of the dehumidifying module assembly 20 (including its housing) disposed above the drum; and the circulating module assembly 10, the regenerating module assembly 30, the condensing module assembly 40 and the like may be disposed on the upper lateral side of the drum (because the drum is approximately in a horizontal cylindrical shape, more vertical space is provided on the upper lateral side for mounting the circulating fan, the regenerating fan and the condenser).

Further, the dehumidifying rotary plate 200 and the circulating fan 101 occupy most of the planar region of the drying device B due to their relatively large diameters. Preferably, the dehumidifying rotary plate 200 and the circulating fan 101 may be configured in such a way that their rotating shafts are heteroplanar with and approximately perpendicular to or form an angle with the rotating shaft of the drum, and are distributed on two sides of the rotating shaft of the rotary drum, respectively. In this way, the positions and paths of the air inlet passage 102 and the air outlet passage 203 that enable the drying device B to be communicated with the drum can be configured more conveniently, such that the circulating path of the circulating air is smoother and the circulating and drying efficiency is improved. In addition, under such arrangement and structure, the dehumidifying rotary plate 200 and the circulating fan 101 can be more reasonably distributed in the upper space of the drum, thereby reducing the overall height of the entire machine body.

In this embodiment, the diameter of the regenerating fan 301 is provided to be smaller than the diameter of the circulating fan 101, and the diameter of the circulating fan 101 is smaller than the diameter of the dehumidifying rotary plate 200, mainly because the circulating airflow needs a relatively high flow velocity and rate to increase the moisture-absorbing efficiency of the rotary plate. Therefore, preferably, the regenerating fan 301 may be provided on a side of the circulating fan 101, and the regenerating fan 301 and the dehumidifying rotary plate 200 are situated on two sides of the rotating shaft of the drum, respectively, so as to make full use of a limited space inside the integrated washer-dryer, and to facilitate the path configuration and smooth flowing of the circulating air and regeneration air.

In this embodiment, since the drying device B is provided horizontally in the upper part of the drum of the integrated washer-dryer, the air inlet passage 102 of the drying device (which is also the air outlet passage of the drum) may communicate the air outlet of the drum A with the air inlet of the circulating fan 101 via a preferred path, such that the moist air in the drum A of the integrated washer-dryer can enter the circulating fan 101 more smoothly and quickly. Similarly, the air outlet passage 203 may communicate the air outlet of the dehumidifying module assembly 20 with the air inlet of the drum A via a preferred path, such that the dry circulating airflow as dehumidified can flow more smoothly and quickly to the drum A to dry the clothes in the drum A.

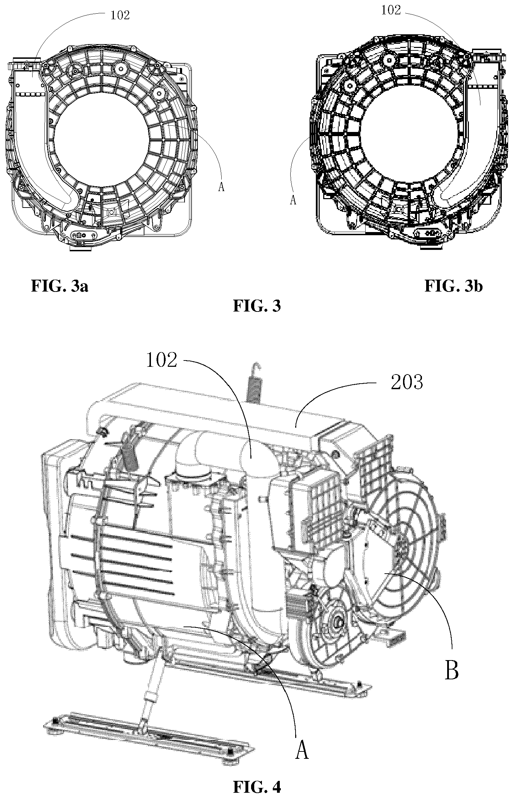

FIG. 3 is a schematic positional diagram of an air inlet passage of a drying device according to an embodiment of the present disclosure.

As shown in FIG. 3a, the air inlet passage 102 of the drying device is provided at the left rear side of the drum, and other components are provided as previously described.

In another embodiment, optionally, the air inlet passage 102 of the drying device may be provided at the right rear side of the drum, as shown in FIG. 3b. In this case, positions of other components of the drying device may change accordingly. For example, the position of the circulating fan directly or indirectly connected to the air inlet passage 102 is accordingly provided at the upper-right rear side of the drum, such that the circulating fan can be communicated with the air inlet passage 102. Meanwhile, planning and configuration of water pipelines of the whole machine can be simplified, and, for example, a self-cleaning water line of the filter screen does not need to span the drum as shown in FIG. 3a.

FIG. 4 is a positional and structural diagram of a drying device of an integrated washer-dryer according to another embodiment of the present application.

As shown in FIG. 4, in another embodiment of the present application, optionally, a plane where the drying device B is located is vertically disposed behind the drum and is substantially perpendicular to the rotating shaft of the drum. In this case, each module assembly, such as the circulating module assembly 10, the dehumidifying module assembly 20, the regenerating module assembly 30 and the condensing module assembly 40, in the drying device B is preferably provided in a plane substantially perpendicular to the rotating shaft of the drum. Further, the dehumidifying rotary plate 200 and the circulating fan 101 may be configured in such a way that their rotating shafts are parallel to the rotating shaft of the drum and are distributed on two sides of the rotating shaft of the drum. Similarly, the regenerating fan 301 may be provided on a side of the circulating fan 101, and the regenerating fan 301 and the dehumidifying rotary plate 200 are situated on two sides of the rotating shaft of the drum, respectively.

Further, in this embodiment, the air inlet passage 102 of the drying device B is provided to extend radially along the drum, and communicates the air outlet at the top of the drum with the air inlet of the circulating fan 101. The air outlet passage 203 is configured to extend along an axial direction of the drum and communicate the air outlet of the dehumidifying module assembly 20 with the air inlet at the front end of the drum.

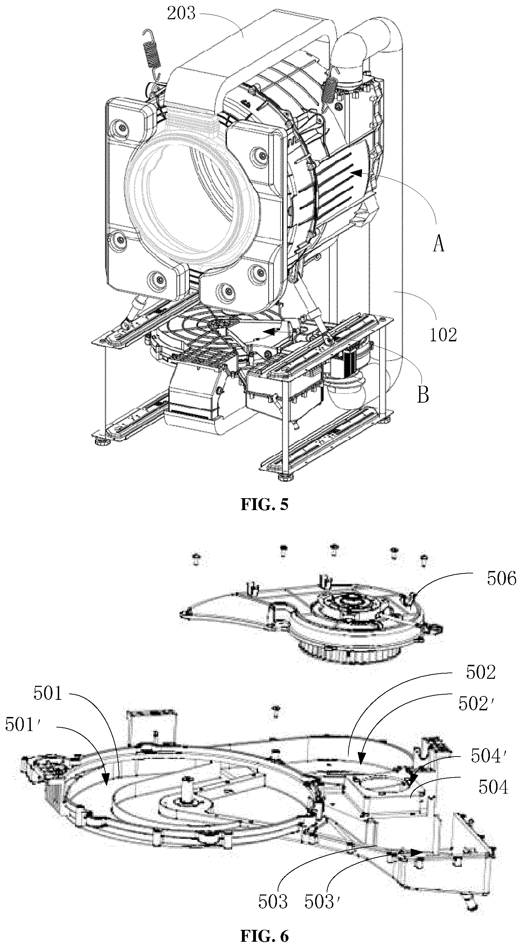

FIG. 5 is a positional and structural diagram of a drying device of an integrated washer-dryer according to still another embodiment of the present application.

As shown in FIG. 5, in another embodiment of the present application, optionally, the drying device B may be provided below the drum A. In this case, the circulating module assembly 10, the dehumidifying module assembly 20, the regenerating module assembly 30 and the condensing module assembly 40 in the drying device B are preferably provided in a plane parallel to the rotating shaft of the drum. Further, the dehumidifying rotary plate 200 and the circulating fan 101 may be configured in such a way that their rotating shafts are approximately perpendicular to or form an angle with the rotating shaft of the drum and are distributed on two sides of the rotating shaft of the drum. Similarly, the regenerating fan 301 may be provided on a side of the circulating fan 101, and the regenerating fan 301 and the dehumidifying rotary plate 200 are situated on two sides of the rotating shaft of the drum, respectively.

Further, in this embodiment, the air inlet passage 102 of the drying device B is provided to extend sequentially along a bottom, a rear and a top of the integrated washer-dryer, and communicates the air outlet of the drum with the air inlet of the circulating fan 101. The air outlet passage 203 is configured to extend along the rear portion of the integrated washer-dryer, and communicates the air outlet of the dehumidifying module assembly 20 with the air inlet of the drum.

The structure of the packaging housing of the drying device B of the integrated washer-dryer according to the present disclosure will be described below.

FIG. 6 is a structural diagram of a lower housing of the packaging housing of the drying device according to the present application.

Referring to FIG. 6, in the present disclosure, the packaging housing 50 of the entire drying device B includes a lower housing and an upper housing. The lower housing is provided with a rotary plate lower housing 501 for housing the dehumidifying rotary plate 200, a circulating fan lower housing 502 for housing the circulating fan 101, a condensing lower housing 503 for housing the condenser 401, and a regenerating lower housing 504 for housing the regenerating fan 301. These lower housing components may be integrally formed into a single integral lower housing, or formed as a plurality of separate component housings.

The upper housing includes a rotary plate upper housing 505, a circulating fan upper housing 506, a condensing upper housing 507 and the like that are provided separately. These housing components will be described in detail below.

FIG. 6 is a structural diagram of the lower housing of the packaging housing of the drying device according to an embodiment of the present disclosure.

As shown in FIG. 6, in a specific embodiment of the present disclosure, preferably, respective lower housing components of the drying device B are integrally formed into an integral lower housing, and the integral lower housing is provided with one or more mounting parts 509 at positions corresponding to edges of the housing of the integrated washer-dryer to fix the entire drying device B to a frame of the washing machine.

In this embodiment, the integral lower housing of the drying device is provided with a rotary plate mounting region 501', a circulating fan mounting region 502', a condensing mounting region 503', and a regenerating mounting region 504', respectively. The circulating fan includes a fan impeller, a circulating fan upper housing 506 covering the impeller and a motor, and a circulating fan mounting region 502'. The regenerating fan 301 may be an integral fan, and under this case, only a mounting space needs to be reserved on the housing of the drying device.

In this embodiment of the present disclosure, the drying device has an integral lower housing, and the entire drying device is fixedly mounted to the outer frame of the washing machine via the mounting part 509 on the lower and/or upper housing. Preferably, a flexible corrugated pipe is provided at a portion where the air outlet passage and the air inlet passage of the drum are communicated with the drying device to prevent vibration of the drum from being transmitted to the drying device.

Referring to FIG. 6, in another embodiment of the present disclosure, optionally, the respective components of the drying device B are assembled in a separate assembling manner. Under this case, the lower housing of the drying device B includes a plurality of component housings such as a rotary plate lower housing 501, a circulating fan lower housing 502, a condensing lower housing 503, a regenerating lower housing 504 and the like, which are formed in a separate manner. That is, the drying device is formed by assembling the aforesaid individual housings.

Further, in this embodiment, the component housings are fixedly and rigidly connected to the outer tub of the drum and vibrate with the movement of the drum during washing and drying. In this form, the dehumidifying rotary plate, which is brittle, may be adversely affected by the vibration, and may also be damaged by the member continuously rotating during the drying.

In yet another embodiment of the present disclosure, optionally, the respective components of the drying device B are assembled in a separate assembling manner. Further, the rotary plate lower housing 501 is fixedly and rigidly connected to the frame of the washing machine; whereas other component housings (the circulating fan lower housing 502, the condensing lower housing 503, the regenerating lower housing 504 and the like) are fixedly and rigidly connected to the outer tub of the drum in a separate or one-piece manner, or optionally are connected to the frame of the washing machine.

This configuration has the following advantages. Since vibration of the drum has a smaller impact on other components than the dehumidifying rotary plate, damages to the dehumidifying rotary plate can be effectively avoided and the cost in integral forming of the lower housing of the drying device can be reduced. Further, in this case, the connection between the air inlet (at the interface between the rotary plate lower housing 501 and the circulating module assembly 10) and the air outlet (at the interface between the rotary plate upper housing 505 and the drum of the washing machine and configured to be communicated with the air outlet passage 203) of the dehumidifying module assembly 20 is preferably formed as a flexible connection (for example, a corrugated hose) to further prevent the vibration of the drum from being transmitted to the dehumidifying rotary plate via other components and reduce vibration damage to the dehumidifying rotary plate.

Further, preferably, in the regenerating module assembly 30, the regeneration air outlet 3012 and the regeneration air outlet connector 3014 that are communicated with the heating module 302 may also be configured as a flexible connection (for example, a corrugated hose). That is, the pipes between the housing of the dehumidifying rotary plate and all vibration-generating components adopt the flexible connection to isolate the transmission of vibration and reduce damages of the vibration to the dehumidifying rotary plate.

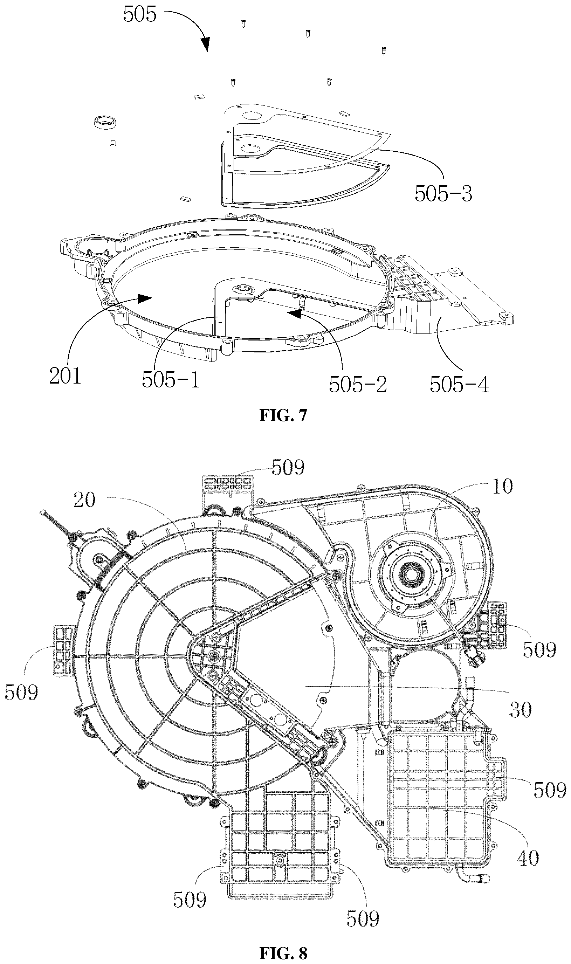

FIG. 7 is a structural diagram of an upper housing of a packaging housing of the drying device according to the present application.

As shown in FIG. 7, in a specific embodiment of the present disclosure, preferably, the upper housing of the drying device B is formed as a rotary plate upper housing 505, a circulating fan upper housing 506, a condensing upper housing 507, and the like that are separate.

An upper housing regenerating region separator 505-3 is provided inside the rotary plate upper housing 505, and is configured to separate the dehumidifying rotary plate into at least two regions that are a dehumidifying part 201 and a regenerating part 202 in the rotary plate upper housing 505. Preferably, the regenerating part 202 has a smaller area than the dehumidifying part 201.

In the embodiments of the present disclosure, the drying device is connected and fixed to a body of the washing machine mainly via two components: the frame of the washing machine and the drum of the washing machine. A connecting structure between the drying device of the present disclosure and the washing machine will be described in detail below.

FIG. 8 is a connecting structure between the drying device of the present disclosure and the frame of the washing machine.

This connecting structure is illustrated by taking an embodiment where the drying device is provided on the top of the washing machine as an example, but the present disclosure is not limited thereto.

In this preferred embodiment, the drying device is mounted at the top of the frame of the washing machine as an integral module, and is fixed to a top front bracket, left and right brackets and the rear cabinet on the cabinet of the washing machine via the mounting part 509 protruding from the upper and lower housings of the drying device, so as to ensure the stability of the complete system and meanwhile provide a space for wiring and piping layout.

The mounting part 509 of the drying device, preferably a plurality of lap joints (or lugs) formed at the edges of the lower and/or upper housing of the drying device, enables the mounting and the fixing to be facilitated, and is lapped onto and locked and fixed to the frame of the washing machine, thereby achieving the mounting and fixing of the entire drying device.

As shown in FIG. 8, at least one mounting part 509 is provided at a corresponding location of each of the four frame sides 1 at the top of the frame of the washing machine. The mounting parts 509 are formed integrally on the lower and/or upper housing of the drying device, and lapped to the frame of the washing machine in a suitable manner for fastening and mounting, such that the entire drying device is mounted and fixed; and no direct rigid connection exists between the drying device and the outer tub of the drum, thereby preventing vibration of the drum in operation from being transmitted to the drying device, in particular to the dehumidifying rotary plate 200.

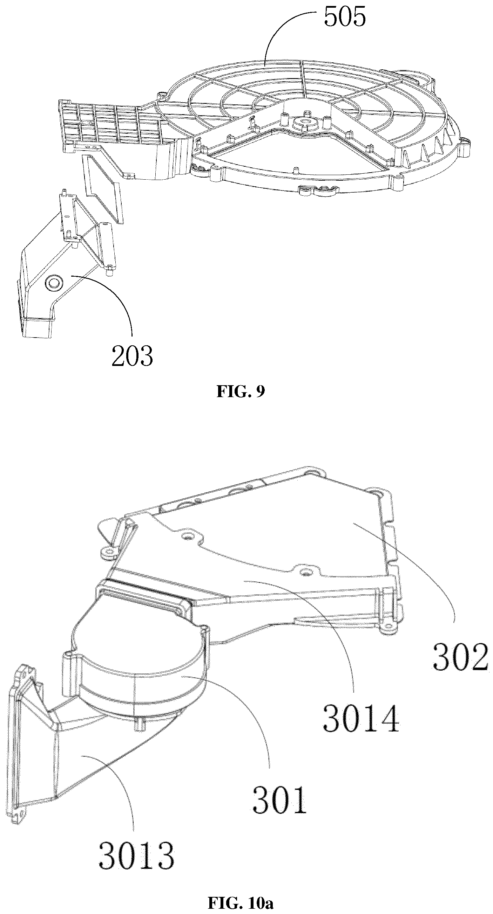

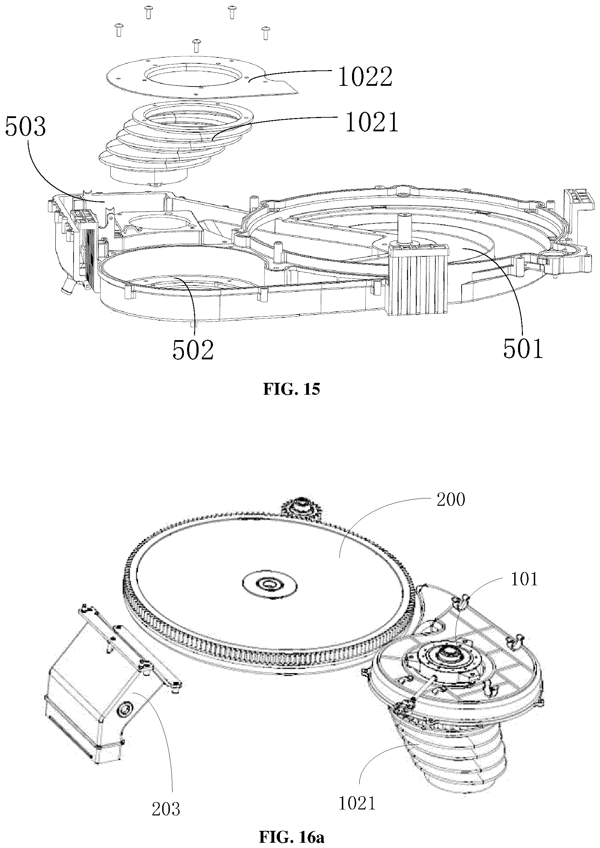

FIGs. 9 and 15 show a connecting structure between a drying device and a drum of a washing machine according to the present disclosure.

As shown in FIG. 9, a connecting part between the lower housing of the drying device and the drum of the washing machine adopts a flexible connection, such as a corrugated hose. Specifically, vibration of the drum can be prevented from being transmitted to the rigid air outlet passage 203, thereby avoiding the transmission of the vibration to the entire drying device.

As described above, the air inlet passage 102 of the circulating module assembly 10 in the present disclosure is communicated with the drum A and the circulating fan 101, respectively, such that the moist air inside the drum A of the integrated washer-dryer can enter the circulating fan 101. Preferably, in the embodiments of the present disclosure, the connection between the air inlet passage 102 and the drum of the washing machine is also a flexible connection such as a corrugated hose to prevent vibration of the drum from being transmitted to the rigid air inlet passage 102 and further to the entire drying device; see FIG. 15.

It should be noted that the structure for connecting the drying device to the frame and drum of the washing machine according to the embodiments of the present disclosure may be applied to embodiments in which the lower housing of the drying device is integrally formed or to embodiments in which the lower housing of the drying device is assembled in parts.

As described above, the drying device according to the present disclosure may be provided in various positions, and may, for example, be provided at the upper part, the rear and the lower part of the drum of the washing machine. Accordingly, the air inlet passage 102 of the drying device may be provided at a plurality of positions, such as the left rear side, right rear side, upper part, front side and the like of the drum of the washing machine.

In some preferred embodiments of the present disclosure, the air inlet passage 102 of the drying device may be provided at the front side of the drum of the washing machine (i.e., at the opening side of the drum of the washing machine), or may pass through the front side of the drum of the washing machine; for example, it may extend from the left rear side of the drum to the left front side of the drum.

In this case, a variant structural design may be made. For example, a front filter screen may be provided at a position in the air inlet passage 102 that is located at a front side of the drum of the washing machine to facilitate manual removal of the filter screen at a front panel of the washing machine. Since the filter screen has to be removed manually, an optimal solution is to provide a filter screen box provided with the filter screen at a certain portion on the front panel of the washing machine. Thus, the air inlet passage 102 (i.e., the air outlet pipe of the drum) of the drying device is actually cut off by the filter screen box, and at least a part of the air inlet passage 102 (this part is open, and the pipe wall may be butt-jointed with the filter screen box hermetically) is close to the front panel of the machine body of the washing machine to facilitate manual removal of the filter screen.

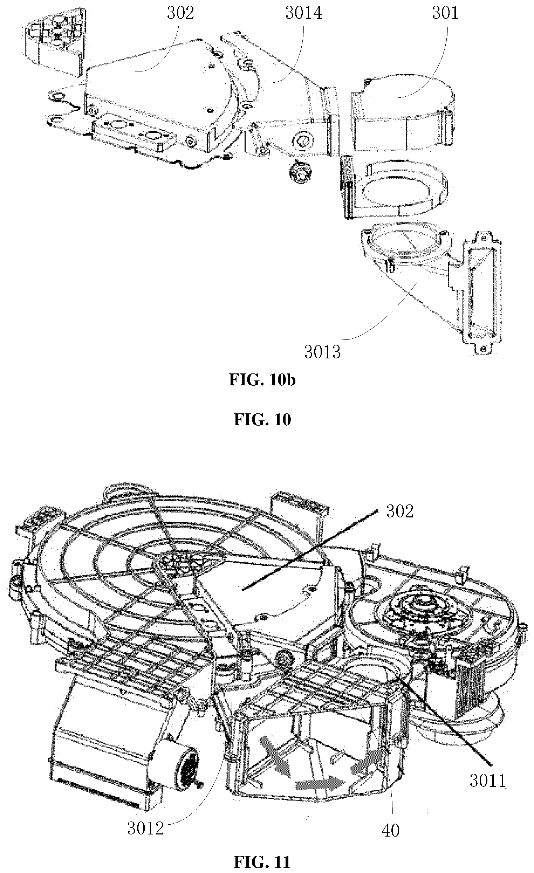

FIG. 10 is a schematic structural diagram of a regenerating module assembly of an integrated washer-dryer according to the present application, where FIG. 10a is an assembly structural diagram of the regenerating module assembly and FIG. 10b is an exploded structural diagram of the regenerating module assembly.

Referring to FIGs. 1 and 10, the regenerating module assembly 30 in the drying device of the present disclosure includes a regenerating fan 301 and a heating module 302.

The regenerating fan 301 is configured to transport a dry regeneration airflow to the heating module 302 and take away and discharge a high-temperature moist airflow generated by the regenerating part 202 of the dehumidifying rotary plate 200. An air inlet of the regenerating fan 301 is namely a regeneration air inlet 3011 and is optionally communicated with the atmosphere, such that the dry air of the atmosphere is fed to the regenerating fan 301 for producing the regeneration airflow. An air outlet (not shown) of the regenerating fan 301 is communicated with the heating module 302, and the regeneration airflow that is heated by the heating module 302 is transformed into a high-temperature and dry regeneration airflow to better dehumidify and dewater the regenerating part 202 of the dehumidifying rotary plate adjacent to the heating module 302.

The regenerating module assembly 30 is provided with the regeneration air inlet 3011 and a regeneration air outlet 3012. Specifically, the regeneration air inlet 3011 is communicated with a dry air source such as atmosphere for feeding dry air to the regenerating fan 301. The regeneration air outlet 3012 is communicated with the atmosphere or the condensing module assembly 40 for discharging a high-temperature and high-humidity regeneration airflow generated in a region of the regenerating part 202 to the atmosphere or the condensing module assembly 40. Optionally, the regeneration air outlet 3012 is provided on the housing of the dehumidifying rotary plate 200 in the region of the regenerating part 202.

In a specific embodiment, preferably, the regenerating module assembly 30 further includes a regeneration air outlet connector 3014 for communicating the regenerating fan 301 with the heating module 302. A port of the regeneration air outlet connector 3014 is hermetically communicated with the air outlet of the regenerating fan 301, and the other port thereof is hermetically communicated with the heating module 302 and formed as an opening shape that is matched with a sector surface of the heating module 302.

The heating module 302 is provided at the downstream of the regenerating fan 301, and is configured to heat up the regeneration airflow generated by the regenerating fan 301. In a specific embodiment, the heating module 302 is provided in a region where the regenerating part 202 is located to further heat and dry the dehumidifying rotary plate 200 in the region of the regenerating part 202, such that the moisture absorbed by the dehumidifying rotary plate 200 is heated and evaporated into a high-temperature moist airflow. Optionally, a pre-heating module (not shown) may be provided at the upstream of the regenerating fan 301 to pre-heat the regeneration air entering the regenerating fan 301 to a certain temperature, such that the pre-heated regeneration air can be heated to a pre-determined temperature faster after entering the heating module 302 via the regenerating fan 301, and the capacity of the regenerating part for restoring the regenerating function of the dehumidifying rotary plate can be improved.

As described above, referring to FIGs. 10 to 13, in the embodiments of the present disclosure, a regeneration cycle may be formed by the regeneration air inlet connector 3013, the regenerating fan 301, the regeneration air outlet connector 3014, the heating module 302 and the condenser 401 sequentially. The regeneration air flowing in the regeneration cycle system can continuously input a low-temperature and dry airflow into the regenerating part 202 to take away and replace the high-temperature and high-humidity airflow generated by heating the regenerating part 202 via the heating module 302; then, the high-temperature and high-humidity airflow output to the atmosphere or the condenser 401 is converted into a low-temperature and dry airflow in turn, such that the dehumidifying function of the regenerating part 202 can be regenerated and restored for continuously dehumidifying the dehumidifying rotary plate 200.

The circulating path of the regeneration airflow in the regenerating module assembly 30 may be a closed-loop cycle or an open-loop cycle corresponding to different connecting structures, which will be particularly described below.

Referring to FIG. 10, in the embodiment of the open-loop cycle, the regeneration air inlet 3011 and the regeneration air outlet 3012 are both communicated with the atmosphere. Under this case, the circulating path of the regeneration airflow is as follows: atmosphere (dry)-regeneration air inlet 3011-regenerating fan 301-air outlet of regenerating fan 301-heating module 302 (high temperature)-regenerating part 202 (high-temperature and high-humidity)-regeneration air outlet 3012-atmo sphere.

In another preferred embodiment, a condensing module assembly 40 is further provided at the downstream of the regeneration air outlet 3012 and is communicated with the air inlet of the condensing module assembly 40. In this case, the condensing module assembly 40 is configured to condense the high-temperature and high-humidity regeneration airflow output from the regeneration air outlet 3012 to form a low-temperature and dry airflow, which is discharged to the atmosphere via the outlet of the condensing module assembly 40 to avoid adverse effects on the atmospheric temperature and humidity of the space where the integrated washer-dryer is located. Condensate water generated by the condensing module assembly 40 in condensing of the high-temperature and high-humidity regeneration airflow is discharged via a condensate water outlet of the condensing module assembly 40.

FIG. 11 is a schematic diagram of a closed-loop regenerating and circulating structure of the regenerating module assembly of the integrated washer-dryer according to the present application.

As shown in FIG. 11, in the embodiment of a closed-loop cycle, the condensing module assembly 40 is provided at the downstream of the regeneration air outlet 3012 and is communicated with the air inlet of the condensing module assembly 40; whereas the air outlet of the condensing module assembly 40 is communicated with the regeneration air inlet 3011. Under this case, a circulating path of the regeneration airflow is as follows: an air outlet of the condensing module assembly 40 (low-temperature and dry)-the regeneration air inlet 3011-the regenerating fan 301-an air outlet of the regenerating fan 301-the heating module 302 (high temperature)-the regenerating part 202 (high-temperature and high-humidity)-the regeneration air outlet 3012-an air inlet of the condensing module assembly 40-the condensing module assembly 40 (low-temperature and dry). Finally, the regeneration airflow flows back to the air inlet of the regenerating fan, i.e., the regeneration air inlet 3011.

The condensing module assembly 40 herein is configured to condense the high-temperature and high-humidity regeneration airflow output from the regeneration air outlet 3012 to form a low-temperature and dry airflow. The condensate water generated from the condensation of the high-temperature and high-humidity regeneration airflow in the condensing module assembly 40 is discharged via the condensate water outlet of the condensing module assembly 40.

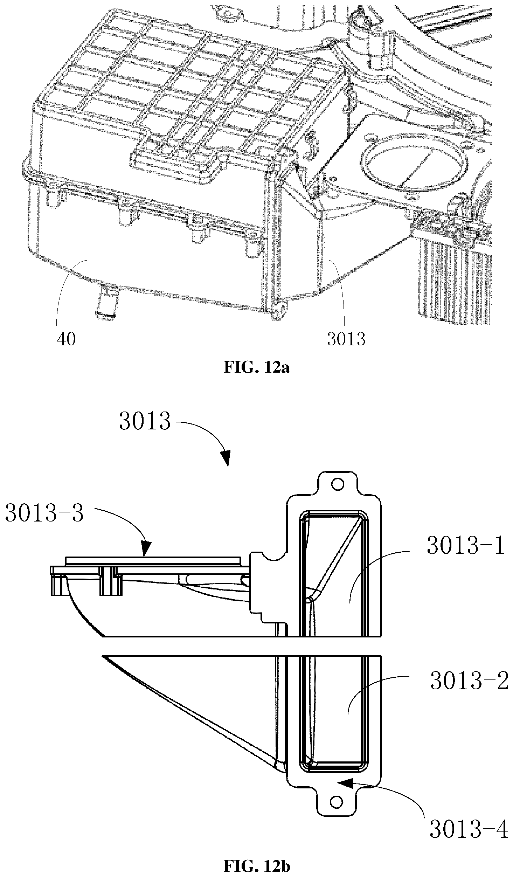

FIG. 12 is a schematic structural diagram of a regeneration air inlet connector according to an embodiment of the present disclosure, where FIG. 12a is a schematic diagram of a connecting structure of the regeneration air inlet connector, and FIG. 12b is a schematic diagram of an internal structure of the regeneration air inlet connector.

Referring to FIG. 12, in the embodiment of the present disclosure, the air inlet of the regenerating fan 301 is also known as a regeneration air inlet 3011 of the regenerating module assembly 30. The regeneration air inlet connector 3013 is formed as an airduct member having two ventilation ports, and includes a horizontal port 3013-3 with a horizontal opening and a vertical port 3013-4 with a vertical opening. Accordingly, the regeneration air inlet connector 3013 is wholly formed in a curved shape transitioning from the horizontal opening to the vertical opening, so as to communicate with the condensing module assembly 40 and the regenerating fan 301 more compactly and hermetically to change directions of the airflow.

The horizontal port 3013-3 herein is communicated with the regenerating fan 301 (connected to the regeneration air inlet 3011) and is preferably formed as an approximate circular opening in the horizontal direction to be communicated along the vertical direction with the regenerating fan 301 provided horizontally. The vertical port 3013-4 is communicated with the condenser 401, and is configured to enable the regenerating fan 301 to suck a low-temperature and dry airflow from the atmosphere or the condensing module assembly 40, thereby reducing the temperature and humidity of the regeneration air. Preferably, the port 3013-4 is formed as a substantially rectangular opening in the vertical direction so as to be communicated along the horizontal direction with the air outlet of the condenser 401 provided vertically.

In the embodiments of the present disclosure, the regeneration air inlet connector 3013 may be formed integrally, or may optionally be formed as upper and lower parts 3013-1 and 3013-2 as shown in FIG. 12b, the two parts being machined and finished separately and then formed as whole via a welding process. In this case, the upper part 3013-1 is communicated with the housing of the condensing module assembly 40, and the lower part 3013-2 is communicated with a condensing mounting region 503' of the lower housing of the drying device.

The regeneration air inlet connector 3013 adopts a specific shape to achieve effects of adjusting orientation of an airduct and sealing while ensuring the manufacturability of the regeneration air inlet connector 3013.

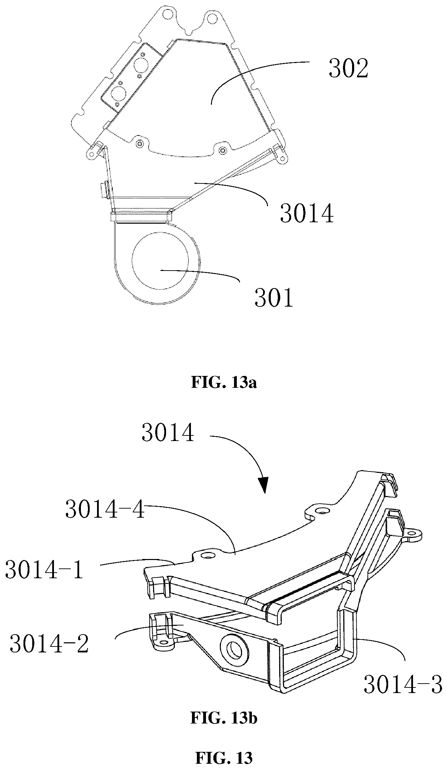

FIG. 13 is a schematic structural diagram of a regeneration air outlet connector according to an embodiment of the present disclosure, where FIG. 13a is a schematic diagram of a connecting structure of the regeneration air outlet connector, and FIG. 13b is a schematic diagram of an internal structure of the regeneration air outlet connector.

Referring to FIG. 13, in the embodiments of the present disclosure, an air outlet of the regenerating fan 301 is provided with a regeneration air outlet connector 3014, through which the regenerating fan 301 is connected to the regenerating part 202 of the dehumidifying module assembly 20. Preferably, the regeneration air outlet connector 3014 is formed as an airduct member having two ports ventilating in the horizontal direction and is provided in the same plane as the regenerating fan 301 and the dehumidifying module assembly 20, so as to occupy less space and enable the regenerating fan 301 to connect more closely to the regenerating part 202.

The regeneration air outlet connector 3014 is preferably provided with two ports ventilating in the horizontal direction, and has an overall shape as a flared shape gradually expanding from a smaller port to a larger port. The smaller port 3014-3 is provided to be hermetically communicated with the regenerating fan 301 (air outlet), and the larger port 3014-4 is provided to be hermetically communicated with the regenerating part 202. Preferably, the shape of the opening of the larger port 3014-4 matches the shape of the regenerating part 202 to achieve a hermetical communication therebetween. For example, in an embodiment where the regenerating part 202 is formed in a round-arc shape, the larger port 3014-4 is also formed as a round-arc opening to match the regenerating part 202.

In this way, due to the regeneration air outlet connector 3014 communicated hermetically, the regenerating fan 301 outputs the low-temperature and dry airflow to the regenerating part 202 (a region where the heating module 302 is located) to take away and replace the high-temperature high-humidity airflow generated by the regenerating part 202, thereby reducing the temperature and humidity of the regenerating part 202 and regenerating and restoring the dehumidifying function of the regenerating part 202. The high-temperature and high-humidity airflow generated by the regenerating part 202 is conveyed to the atmosphere or the condenser 401 via the regeneration air outlet 3012.

In the embodiments of the present disclosure, the regeneration air outlet connector 3014 may be formed integrally, or may optionally be formed as upper and lower parts 3014-1 and 3014-2 as shown in FIG. 13b, the two parts being machined and finished separately and then formed via a welding process. In this case, the upper part 3014-1 is communicated with the upper housing of the regenerating part 202, and the lower part 3014-2 is communicated with the rotary plate mounting region 501' of the lower housing of the drying device.

The regeneration air outlet connector 3014 adopts a specific shape to achieve effects of adjusting the orientation of the airduct, diffusing and sealing while ensuring the manufacturability of the regeneration air outlet connector 3014.

The structure and function of a circulating module assembly 10 in the drying device of the present disclosure will be described below.

As shown in FIG. 1, the circulating module assembly 10 includes a circulating fan 101, an air inlet passage 102, a circulating air interface 103, a circulating fan lower housing 502 (or a circulating fan mounting region 502' of the lower housing of the drying device), and a circulating fan upper housing 506. The circulating module assembly 10 is configured to suck moist air from a drum of the washing machine to form a circulating air and output the same to the dehumidifying module assembly 20 for dehumidification, and enable a dry air having moisture therein removed to return to the drum of the washing machine.

The circulating fan 101 generates a circulating airflow by rotating, and the circulating airflow is fed to the dehumidifying module assembly 20 via the circulating air interface 103 for dehumidifying operations. In an embodiment where the drying device is provided horizontally, the circulating fan 101 is preferably provided substantially in the same plane as the dehumidifying module assembly 20, and the air inlet passage 102 is approximately perpendicular to the plane to transform the moist airflow from the direction of the drum into a circulating airflow rotating in the plane of the dehumidifying module assembly 20, such that the circulating airflow is input into the dehumidifying module assembly 20.

The air inlet passage 102 is communicated with the drum A and the circulating fan 101, such that moist air in the drum A of the integrated washer-dryer can enter the circulating fan 101. Preferably, when the circulating module assembly 10 is provided above the drum A, the air inlet passage 102 is provided in an approximately vertical direction, such that the moist air in the drum A of the integrated washer-dryer enters the circulating fan 101 from down to up. Further, preferably, the air inlet passage 102 is connected to the drum of the washing machine via a flexible pipe such as a corrugated hose, such that the vibration of the drum of the washing machine can be prevented from being transmitted to the drying device, thereby avoiding vibration of the drying device, as shown in FIG. 15.

The circulating air interface 103 is provided between the circulating fan 101 and the dehumidifying module assembly 20, and is configured to communicate the circulating fan 101 with the dehumidifying module assembly 20 and form a circulating airduct between the circulating fan 101 and the dehumidifying module assembly 20. The circulating air interface 103 is provided with two ports, one of which is communicated with the air outlet of the circulating fan 101 and the other port thereof is communicated with the dehumidifying rotary plate 200. Preferably, the port communicated with the dehumidifying rotary plate 200 is designed to match the disc shape of the communicated dehumidifying rotary plate 200, and is communicated with the lower or upper part of the dehumidifying rotary plate 200. In this way, the circulating air output from the circulating fan 101 enters from the lower or upper part of the dehumidifying rotary plate 200 and flows to the upper or lower part of the dehumidifying rotary plate 200 passing through the rotary plate 200, and then flows and circulates in the dehumidifying part 201 inside the dehumidifying rotary plate 200, thereby allowing the dehumidifying part 201 to absorb the moisture in the circulating air.

Structural components of the circulating fan 101 will be described below.

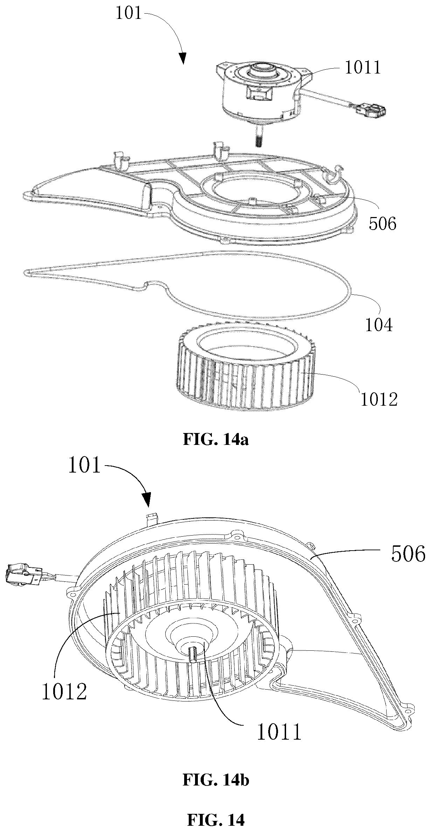

FIG. 14 is a schematic diagram of an upper housing assembly of a circulating module assembly of the drying device according to the present disclosure. FIG. 14a is an exploded view of the upper housing assembly, and FIG. 14b is an assembled view of the upper housing assembly.

Referring to FIG. 14, the circulating fan 101 includes a motor 1011 and an impeller 1012.

The circulating fan upper housing 506 is formed in a volute shape, the volute shape is as shown in FIG. 14, and a wired fixing clip and a pipe fixing clip are provided on the volute. The volute shape is unique, meets the fluid design requirement and serves as a circulating airduct to provide proper air volume and air velocity to the dehumidifying module assembly 20 for airflow guidance.

The motor 1011 is configured to drive the impeller 1012 to rotate at a high velocity for generating a circulating air. The motor 1011 is fixed to a circulating fan upper housing 506, for example, via fixing means such as a screw. The impeller 1012 is formed into a circular shape with a plurality of blades and is driven by the motor to generate the circulating air rotating in a high velocity.

FIG. 15 is a schematic diagram of a lower housing assembly of a circulating module assembly of the drying device according to the present disclosure.

As shown in FIG. 15, the lower housing assembly of the circulating module assembly may be formed as a circulating fan lower housing 502 independently or integrally formed as a lower housing of the drying device having a circulating fan mounting region 502'. The circulating fan upper housing 506 is sealed and fixed to the lower housing assembly of the circulating module assembly via a sealing strip (a circulating fan sealing strip 104 in FIG. 14) and a screw. In this case, a corresponding countersink is provided in the lower housing assembly of the circulating module assembly to fix the sealing strip.

As shown in FIG. 15, the lower housing assembly of the circulating module assembly is connected to the drum via a flexible connection such as a corrugated pipe, such that the vibration of the drum can be prevented from being transmitted to the rigid air inlet passage 102 and further to the entire drying device.

FIG. 15 exemplarily shows a mounting way. The present disclosure, of course, is not limited to this. A corrugated pipe 1021 at the position of the air inlet passage 102 is fixed to a pressing plate 1022 via a locating pin, such that the corrugated pipe 1021 can be fixed by fixing the pressing plate via a screw, and a flexible connection formed between the housing of the circulating fan and the drum is implemented by the corrugated pipe.

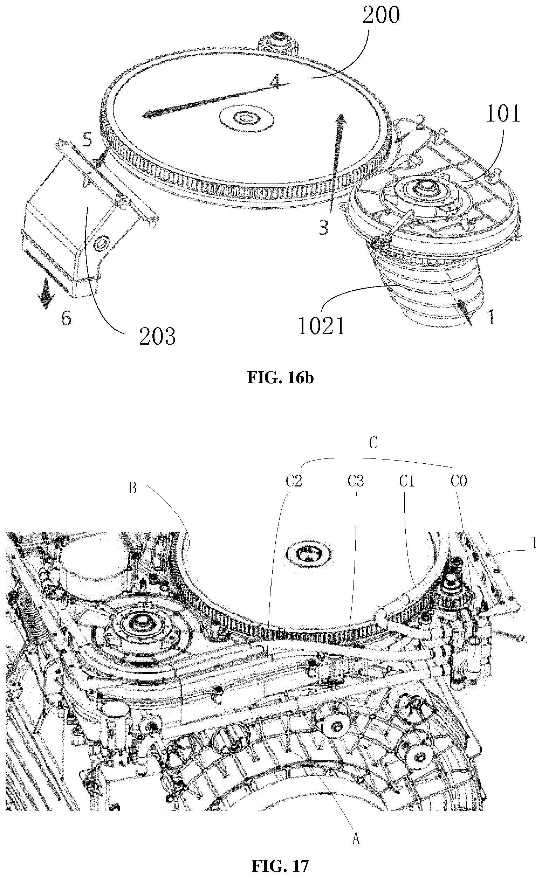

FIG. 16 is a schematic diagram of a dehumidifying and circulating process of a circulating module assembly according to an embodiment of the present disclosure.

Referring to FIGs. 16a and 16b, the circulating module assembly 10 forms a dehumidification cycle with the dehumidifying module assembly 20, and the circulating air flows in a direction as shown by arrows in FIG. 16b. The circulating airflow enters the corrugated hose from the interior of the drum (along arrow 1) via the air outlet passage (with a filter screen therein) of the drum, passes through the air inlet of the circulating fan (air inlet passage 102), flows from the air outlet of the circulating fan to the lower side of the dehumidifying rotary plate 200 (along arrow 2), passes through the dehumidifying rotary plate 200 from its lower side to its upper side (along arrow 3), flows in an upper space of the dehumidifying rotary plate 200 (along arrow 4), reaches the air outlet passage 203 (along arrow 5), and then is circulated into the drum by passing through a connector of the air outlet passage 203 (along arrow 6). Described above is only an example of the airflow. In practice, the airflow may flow to the upper side of the dehumidifying rotary plate by sequentially passing through the air inlet of the circulating fan and then the air outlet of the circulating fan, and passes through the dehumidifying rotary plate downward from its upper side to reach the lower side, flows to the air outlet passage in the lower space, and is finally circulated to the drum.

FIG. 17 is a schematic diagram of a water supplying assembly of an integrated washer-dryer according to the present application.

As shown in FIG. 17, the water-supplying assembly C of the integrated washer-dryer according to the present application will be further described below. The water-supplying assembly C of the integrated washer-dryer includes one water inlet C0, a plurality of water-supplying ports (e.g., a drum water-supplying port C1, a filter screen water-supplying port C2, a condenser water-supplying port C3, and the like), and one water outlet C4.

The water inlet C0 is communicated with an external water source, such that water from the external water source is supplied to the integrated washer-dryer as a whole, where the water supplying includes supplying water to the drum for washing, supplying water to the filter screen for self-cleaning and supplying water to the condenser for condensing. The water outlet C4 is communicated with the external space to discharge wastewater generated by the integrated washer-dryer to the outside of the machine body.

In a specific embodiment, the one water inlet C0 of the water-supplying assembly C is connected to a tap water pipe, and is communicated with three water-supplying ports C1, C2 and C3, which are a drum water-supplying port C1 for supplying water to the drum of the washing machine and/or a cleaning fluid cartridge, a filter screen water-supplying port C2 for supplying water to a self-cleaning spray pipe of the filter screen, and a condenser water-supplying port C3 for supplying low-temperature water to the condenser to provide condensing water for the regeneration and circulation of the drying device.

Described above is only an optional embodiment of the present disclosure, and the present disclosure is not limited to this. There may also be fewer water-supplying ports to simplify or combine the water-supplying structures and functions. For example, in case no condenser is provided, the condenser water-supplying port C3 is not required. Or, considering that the water supplies for both the self-cleaning of the filter screen and the condenser are functional components of the drying device, the water-supplying ports thereof may be combined into one water-supplying port to reduce the structural complexity. In other cases, there may also be more than three water-supplying ports to achieve more cleaning or cooling functions, all of which fall within the protection scope of the present disclosure.

The aforesaid water-supplying assembly C is provided with a solenoid valve switch that can control the opening and closing of the plurality of water-supplying ports, respectively, thereby enabling to control the specific time in supplying water to the drum, supplying water to the cleaning fluid cartridge, and supplying water for condensation or filter screen cleaning.

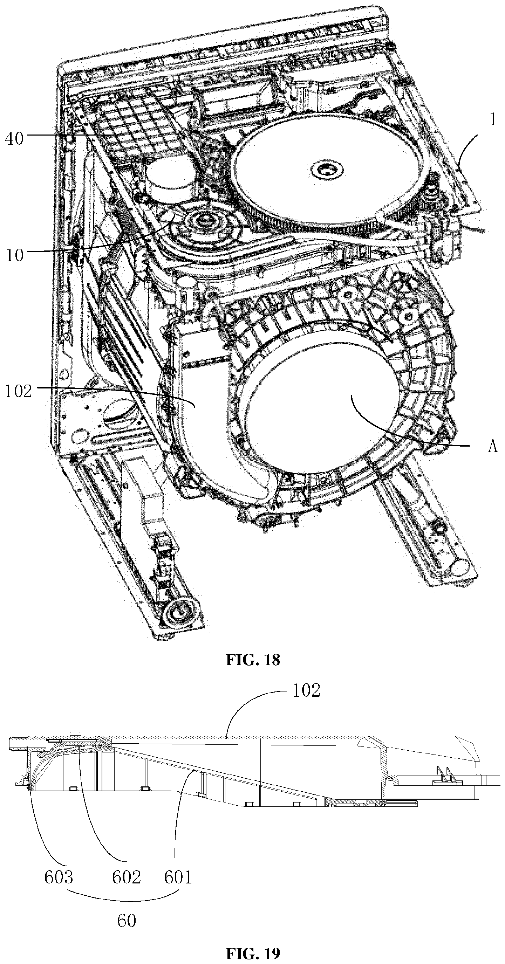

FIG. 18 is a schematic diagram of connection for the air inlet passage of the drying device of the washing machine.

As shown in FIG. 18, the air inlet passage 102 of the drying device communicates the circulating fan 101 with the drum A. Under the action of the circulating fan, the moist air in the drum is introduced to the dehumidifying part 201 of the dehumidifying rotary plate 200 for dehumidification.

In an optional embodiment of the present disclosure, a filtering assembly 60 is provided at the upstream of air intaking of the circulating fan 101 and is preferably provided in the air inlet passage 102 for filtering lint and impurities in the air flowing from the drum to the dehumidifying module assembly 20. Thus, the lint or impurities are prevented from entering the dehumidifying module assembly 20, especially from entering the dehumidifying rotary plate 200; otherwise the lint or impurities block the dehumidifying rotary plate 200, which affects the dehumidifying effect. Further, if the lint adhered to the dehumidifying rotary plate 200 is brought into the regenerating part during the rotation process, the lint may be easily ignited because the regenerating part has a heating module.

The internal structure of the filtering assembly 60 will be described in detail below.

FIG. 19 is a schematic structural diagram of a filtering assembly according to the present disclosure.

As shown in FIG. 19, the filtering assembly 60 includes a filter screen 601, at least one cleaning nozzle 602, and a nozzle water-supplying pipe 603, which are provided sequentially in the air inlet passage 102 along an air intaking direction, such that the air from the drum of the washing machine first passes through the filter screen 601 to filter out the lint and impurities contained in the air. In addition, the cleaning nozzle 602 is configured to spray clean water to clean the filter screen 601 to remove any lint or impurity adhered to the filter screen 601, such that the filtering capability of the filter screen 601 is restored to continuously filter the air from the drum. The nozzle water supplying pipe 603 is communicated with the filter screen water-supplying port C2 to provide clean water from an external water source to the cleaning nozzle 602.

In an optional embodiment of the present disclosure, the filtering assembly 60 is further provided with a clean water flow passage (not shown). The clean water flow passage is preferably provided on a side of a non-filtering surface 6012 of the filter screen 601 and is communicated with the water outlet C4 of the washing machine. Thus, the self-cleaning water flows from the nozzle water supplying pipe 603 to the nozzle and then rinses a filtering surface 6011 of the filter screen to flush out the lint and impurities adhered to the filter screen. Then, the self-cleaning water flows, after flushing the filter screen, to the water outlet C4 of the washing machine and is discharged to the outside of the machine body. Optionally, a separate water outlet C5 may be provided in the clean water flow passage to allow the self-cleaning water to be discharged independently to the outside of the machine body of the washing machine.

Preferably, the cleaning nozzle 602 is provided to taper into a flat shape from the nozzle water supplying pipe 603 to the filter screen 601. Accordingly, the width of the filter screen 601 basically covers the entire width of the air inlet passage 102 to improve the filtering effect. Further, the cleaning water is enabled to flow to cover the entire width of the filter screen 601, thereby improving the self-cleaning effect of the filter screen 601.

Further, optionally, the filter screen 601 is formed in the air inlet passage 102 as an inclined extending shape, and the shape has the following advantages. Firstly, a filtering area of the air can be increased, such that the airflow passing efficiency will not be affected by the blocking caused by a small filtering area. Secondly, the dirt, if any, left during the self-cleaning process of the filter screen will not affect the subsequent airflow passing efficiency. Thirdly, an inclination angle of the filter screen 601 relative to the inner wall of the air inlet passage 102 may be provided in a range of 0-80°, preferably in a range of 5-45°, such that the self-cleaning of the filter screen can correspondingly have a rather great flushing area, thereby effectively preventing the lint and the like from being embedded in holes of the filter screen and from increasing the difficulty in flushing off.

As shown in FIG. 19, the moist airflow from the drum first passes through a surface of the filter screen (which can be defined as a filtering surface for intercepting lint and the like), and then flows upward after passing through the filter screen to reach the dehumidifying part 201 of the dehumidifying rotary plate 200. After flowing out of the nozzle water-supplying pipe 603, the self-cleaning water flow is sprayed via the cleaning nozzle 602 to flush the filtering surface of the filter screen 601 to flush out lint and the like attached thereto.

In another embodiment, the cleaning nozzle 602 may be provided at the non-filtering surface 6012 of the filter screen. During the self-cleaning process, the nozzle 602 may spray to the filter screen some water with a certain flow velocity (i.e., a water flow that can form a certain impact on the filter screen) against the flowing direction of the airflow, such that the water is sprayed from the non-filtering surface 6012 to the filter screen to wash away the lint attached to the filter screen.

In FIG. 19, the arrow 1 indicates the flowing direction of the filter screen self-cleaning water, and arrow 2 indicates the flowing direction of the moist airflow from the drum. The cleaning nozzle 602 herein is provided to go against the air intaking direction, such that the self-cleaning water sprayed from the cleaning nozzle 602 flows against the air intaking direction, and the lint or impurities on the filter screen 601 can be thereby cleaned more thoroughly. The self-cleaning water in this embodiment flows against the air intaking direction, and may either flow along the filtering surface 6011 of the filter screen or along the non-filtering surface 6012 of the filter screen. The water flow velocity and flow rate may be relatively small when flushing the filtering surface, and may be relatively large when flushing the non-filtering surface 6012. In addition, the water flowing direction is at an angle of, for example, 40-90° to an extending surface of the filter screen, facilitating flushing of the lint trapped in holes of the filter screen.

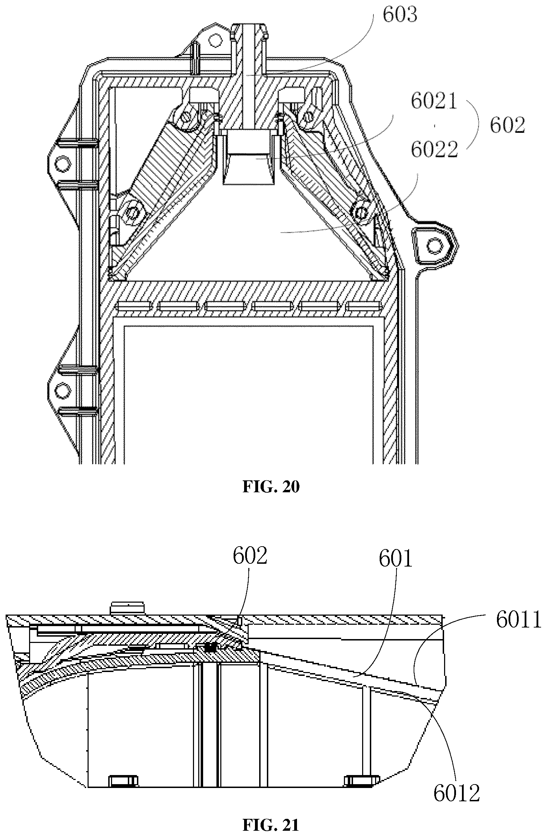

FIG. 20 is a schematic structural diagram of a nozzle of the filtering assembly according to the present disclosure.

Referring to FIG. 20, the cleaning nozzle 602 includes a connecting part 6021 connected to the nozzle water-supplying pipe 603, and a duckbill-shaped extending part 6022. The connecting part 6021 is configured to connect to the nozzle water-supplying pipe 603; and the extending part 6022 extends from the connecting part and gradually decreases in the height direction and gradually increases in the width direction, thereby forming an approximately flat downward water flow.

Further, preferably, a width of the extending part 6022 (water outlet) of the cleaning nozzle 602 is provided to be greater than or slightly less than the width (e.g., 90% of the width) of the filter screen to clean the filter screen as fully as possible.

FIG. 21 is a schematic positional diagram of a nozzle of a filtering assembly according to the present disclosure.

As shown in FIG. 21, the filter screen 601 is obliquely provided along the air inlet passage 102, and the filtering surface 6011 is the surface facing against the air intaking direction, which means that the lint or impurities in the air from the drum will be filtered and accumulated in large quantities on a side of the filtering surface 6011. Therefore, the acting surface on which the filter screen self-cleaning is performed is preferably provided on the filtering surface 6011 of the filter screen. To achieve this purpose, the cleaning nozzle 602 is preferably provided on a side of the filtering surface 6011 of the filter screen 601, and is further preferably provided obliquely at an inclination angle as the filter screen 601. As a result, the cleaning water provided by the nozzle water-supplying pipe 603 can be sprayed onto the filtering surface 6011 as comprehensively as possible after being sprayed from the cleaning nozzle 602.

In another embodiment, optionally, the cleaning nozzle 602 may be provided facing two side surfaces of the filter screen 601 (including the filtering surface 6011 and the non-filtering surface 6012 opposite the filtering surface), such that the two side surfaces of the filter screen can be cleaned and sprayed simultaneously. More preferably, two cleaning nozzles 602 facing the filtering surface 6011 and the non-filtering surface 6012 of the filter screen, respectively, may be provided to clean the two side surfaces of the filter screen simultaneously, thereby improving the cleaning efficiency and cleaning effect. In this case, it is, for example, possible to configure one cleaning nozzle 602 to spray water and clean the non-filtering surface 6012 first, and then activate the other cleaning nozzle 602 to spray water and clean the filtering surface 6011 after a provided time; or the two cleaning nozzles may be activated simultaneously. In this way, the cleaning effect of the filter screen can be further improved.

Preferably, the cleaning nozzle 602 is generally provided to activate cleaning of the filter screen when the drying device stops working, such that the moisture content of the air in the air inlet passage 102 can be prevented from being increased when the cleaning nozzle sprays water and cleans the filter screen, thereby preventing adverse influence on the operation of the drying device. Further, the cleaning nozzle 602 is provided to start spraying water and cleaning before the drying device starts working, such that the lint and impurities on the filter screen are all removed before air is fed from the drum and the drying device is started to perform drying. The water spraying and cleaning duration of the cleaning nozzle 602 may be of a preset time length; or a detecting module may be provided to detect whether the lint and impurities on the filter screen 601 have been removed completely, and controls the cleaning nozzle 602 to stop spraying water and cleaning if the detection result is "yes."

Optionally, a cleaning water detecting device may be provided at the position of the cleaning nozzle and configured to detect parameters, such as a flow rate and velocity of the cleaning water, and a cleaning state of the filter screen, and send the parameters to the control device, such that the control device is enabled to control the spraying or closing, spraying frequency, spraying velocity and the like of the cleaning water.

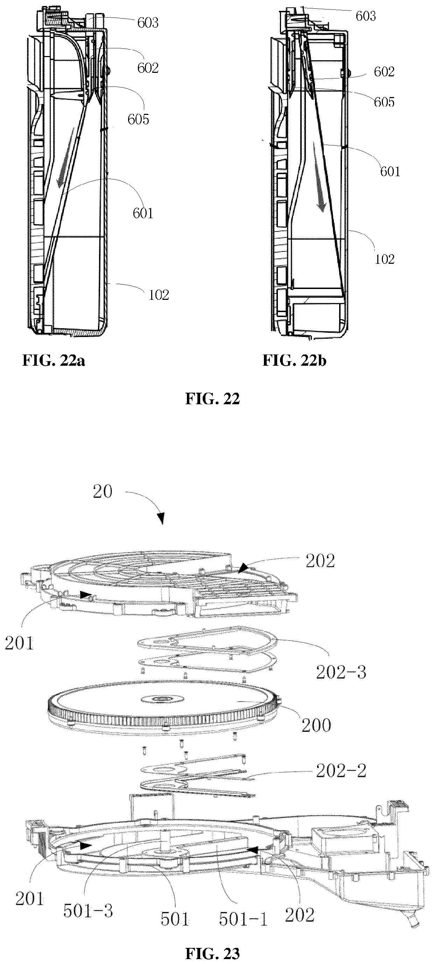

FIG. 22 is a schematic positional diagram of a condensing nozzle of a filtering assembly according to the present disclosure.

In a preferred embodiment, the filtering assembly 60 is further provided with a condensing nozzle 605, which is provided on the outer wall of the air inlet passage 102 to achieve pre-condensing by spraying water onto the outer wall of the air inlet passage 102. Moist air that enters the drying device from the drum via the air inlet passage 102 contains a large amount of moisture, and generally has the room temperature or a relatively high temperature. By pre-condensing the moist air in the air inlet passage 102, the moisture in the circulating airflow can be condensed into liquid water in advance and discharged from the machine body via a preset flow passage (e.g., a sleeve is provided outside the outer wall of the air inlet passage 102 to form a space for the condensing water flow passage). As a result, the moisture in the circulating airflow can be reduced in advance to improve the dehumidifying efficiency of the drying device, reduce the dehumidifying time and save the energy. The pre-condensing nozzle 605 may directly inject water to the inner wall of the air inlet passage 102, such that the water flows slowly down the inner wall to keep the wall of the air inlet passage at a low temperature, thereby allowing to condense the airflow flowing through the air inlet passage.

In this embodiment, the condensing effect of the air inlet passage 102 of the air outlet of the drum is implemented by maintaining a continuous low temperature of the pipe wall by slowly spraying water onto the outer wall of the pipe of the air inlet passage 102 via the condensing nozzle 605, thereby achieving condensation of the hot and moist airflow flowing through the pipe. Therefore, the condensing nozzle 605 generally starts spraying water for condensation when the drying device starts working, and stops working when the drying of clothes in the drum is completed and the drying device stops working. Alternatively, the condensing nozzle 605 may start working at the early stage of the drying operation, and stop at the later stage, because the precondensation as started can reduce the moisture content in the airflow, which is rather high at the early stage, and thus, the drying efficiency can be improved.

Preferably, an outer pipe may sleeve the air inlet passage 102, and the condensing nozzle 605 is provided between the outer pipe and the outer wall of the air inlet passage 102, such that a water flow space is formed between the outer wall of the pipe of the air inlet passage 102 and the inner wall of the outer pipe sleeved thereto. With the water flow space, the condensate water may be directed to be discharged from the washing machine via a separate water discharging pipe, or to flow into the outer tub of the drum and merge with the water outlet passage of the drum to be discharged via the water discharging pipe of the washing machine, such that the water can be sprayed to the outer wall of the pipe while ensuring that no such condensate water is left behind.

Optionally, a condensate water detecting device is further provided at the position of the condensing nozzle, configured to detect a flow rate and velocity of the condensate water and send the flow rate and velocity to the control device, allowing the control device to control the spraying or closing, spraying velocity, and the like of the condensate water.

In another optional embodiment of the present disclosure, there may be no cleaning nozzle. Accordingly, a removable filter screen 601 may be provided in the air inlet passage 102, such that a user can remove and clean the filter screen 601 and then assemble it into the air inlet passage 102. In order to facilitate the assembly and disassembly of the filter screen for the user, preferably, the path of the air inlet passage 102 may be provided to pass through a removable box provided in the front-end panel or side panel of the washing machine, and the filter screen 601 is provided in the removable box, such that the user can easily open the box, take out and clean the filter screen, and then close the box after putting the filter screen back.

FIG. 23 is a schematic structural diagram of a dehumidifying module assembly according to the present disclosure.

As shown in FIG. 23, a main part of the drying device of the present disclosure is the dehumidifying module assembly 20, and the dehumidifying module assembly 20 sequentially includes the rotary plate upper housing 505, the dehumidifying rotary plate 200, and the rotary plate lower housing 501 from top to bottom. The rotary plate lower housing 501 and the rotary plate upper housing 505 are fixed to each other by means of buckles, bolts, glue and so on.

Further, the dehumidifying module assembly 20 includes two functional regions, i.e., the dehumidifying part 201 and the regenerating part 202; and the two functional regions are divided and isolated by the rotary plate upper housing 505, the rotary plate lower housing 501 and the separator therein. The rotary plate upper housing 505 and the rotary plate lower housing 501 are both provided with a regenerating part separator, respectively, to separate the internal space of the housing into at least two regions including the dehumidifying part 201 and the regeneration part 202, and maintain the relative sealing between the two regions. The dehumidifying rotary plate 200 is encapsulated in a closed space by the rotary plate upper housing 505 and the rotary plate lower housing 501, and fixedly rotated by a bearing in the center of the rotary plate lower housing 501.

The internal space of the rotary plate upper housing 505 corresponds to the dehumidifying part 201 of the dehumidifying rotary plate 200, and is configured for the flow of the circulating air. The heating module 302 provided on the rotary plate upper housing 505 corresponds to the regenerating part 202 of the dehumidifying rotary plate 200, and is configured for the flow of the regeneration air. The rotary plate lower housing 501 corresponds to the dehumidifying part 201 and the regenerating part 202 of the dehumidifying rotary plate 200, and the rotary plate lower housing 501 separates the dehumidifying part 201 and the regenerating part 202 by a lower housing regenerating region separator 501-1.

Referring to FIG. 23, the housing component of the dehumidifying module assembly 20 further includes a lower housing regenerating region assembly part 202-2 and an upper housing regenerating region assembly part 202-3, which are configured to at least separate the regenerating part 202 from the dehumidifying part 201 of the dehumidifying rotary plate and maintain a relative sealing therebetween. That is, the airflow from the regenerating part 202 may flow to the dehumidifying part 201 as little as possible by passing through the separator, and the airflow from the dehumidifying part may flow to the regenerating part as little as possible by passing through the separator.

The lower housing regenerating region assembly part 202-2 is connected to the rotary plate lower housing 501, and is configured to achieve a movable sealing contact between the rotary plate lower housing 501 and the dehumidifying rotary plate 200. Specifically, two lower housing regenerating region assembly parts 202-2 are preferably provided vertically. The lower housing regenerating region assembly part 202-2 disposed close to the rotary plate lower housing 501 is a rigid mounting member for fixing to the rotary plate lower housing 501, and the lower housing regenerating region assembly part 202-2 disposed close to the dehumidifying rotary plate 200 is a flexible sealing member for achieving a movable sealing contact with the dehumidifying rotary plate 200. The rigid mounting member and flexible sealing member may be interchanged in position depending on the specific mounting manner. The lower housing regenerating region assembly part 202-2 is formed into a shape such as a sector shape matching a corresponding region of the regenerating part 202 to fix to the lower housing regenerating region separator 501-1 of the rotary plate lower housing 501, thereby hermetically defining a space of the regenerating part 202 together with the lower housing regenerating region separator 501-1.

The upper housing regenerating region assembly part 202-3 is connected to the rotary plate upper housing 505 to achieve a movable sealing contact between the rotary plate upper housing 505 and the dehumidifying rotary plate 200. Specifically, two upper housing regenerating region assembly parts 202-3 are preferably provided vertically. The upper housing regenerating region assembly part 202-3 disposed close to the rotary plate upper housing 505 is a rigid mounting member for fixing the rotary plate upper housing 505, and the upper housing regenerating region assembly part 202-3 disposed close to the dehumidifying rotary plate 200 is a flexible sealing member for achieving a movable sealing contact with the dehumidifying rotary plate 200. The upper housing regenerating region assembly part 202-3 is formed into a shape such as a sector shape matching a corresponding region of the regenerating part 202 to fix to the upper housing regenerating region separator 505-3 of the rotary plate upper housing 505, thereby hermetically defining a space of the regenerating part 202 together with the upper housing regenerating region separator 505-3. In addition, the heating module 302 is fixed to a sector-shaped notch region (a corresponding region of the regenerating part 202) of a disc plane in which the rotary plate upper housing 505 is located, and forms a thermal sealing with the rotary plate upper housing 505 via a thermal sealing member.

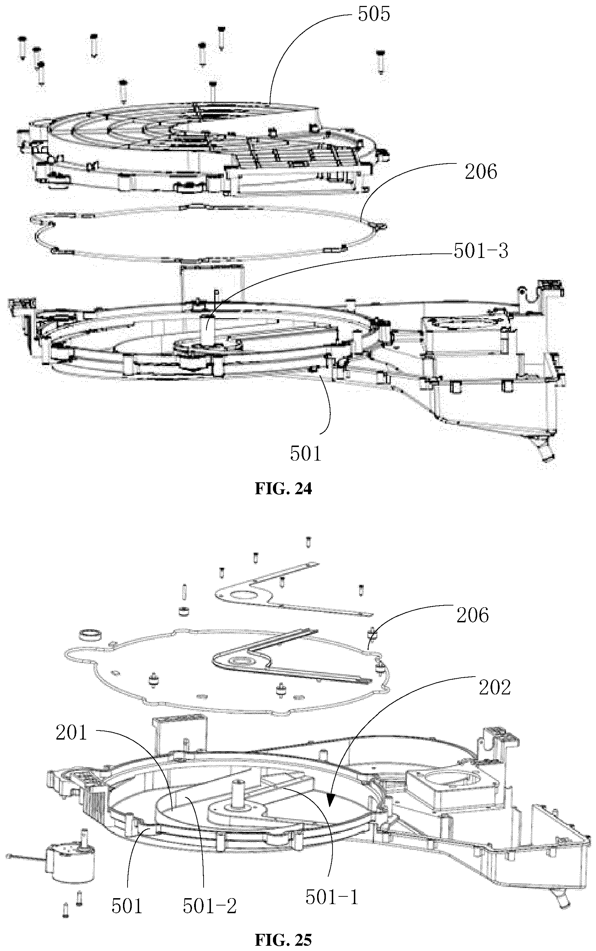

FIG. 24 is an exploded structural diagram of a sealing package of the dehumidifying module assembly.

As shown in FIG. 24, in the embodiments of the present disclosure, the rotary plate upper housing 505 and the rotary plate lower housing 501 are sealed and fixedly connected to each other to seal and encapsulate the dehumidifying rotary plate 200 therebetween. For example, a sealing connection between the rotary plate upper housing 505 and the rotary plate lower housing 501 is achieved by a housing sealing ring 206 with a soft rubber material.

Optionally, the housing sealing ring 206 is a rubber gasket or silicone gasket, and is connected and fixed to the upper and lower housings by a metal pressing plate with screws. Specifically, the rotary plate portions of the rotary plate upper housing 505 and rotary plate lower housing 501 (the portions connected to the dehumidifying rotary plate 200) are provided with a mounting groove for the sealing ring 200-5; and the rotary plate upper housing 505 and the rotary plate lower housing 501 are buckled and then fastened by bolts, such that the sealing of the whole rotary plate region can be achieved.

FIG. 25 is a schematic structural diagram of a lower housing of a dehumidifying module assembly according to the present disclosure.

As shown in FIG. 25, the rotary plate lower housing 501 of the dehumidifying module assembly is communicated with the circulating fan 101, and the circulating air (moist airflow) enters the lower space of the dehumidifying rotary plate 200 (the space defined by the rotary plate lower housing 501) via the opening of the rotary plate lower housing 501, and flows circularly. Then, the circulating air upwardly passes through the dehumidifying rotary plate 200 and convects to the upper space of the dehumidifying rotary plate 200 (the space defined by the rotary plate upper housing 505), such that the moist circulating air can pass through the dehumidifying rotary plate of the dehumidifying part 201 for dehydration and drying.

The rotary plate lower housing 501 is provided with at least two lower housing regenerating region separators 501-1 (a regenerating part separator) and at least one lower housing dehumidifying region separator 501-2 (a dehumidifying part separator). The lower housing regenerating region separator 501-1 is formed in a corresponding region of the regenerating part 202 of the rotary plate lower housing 501, is formed into a relatively small sector shape, and is configured to at least separate the regenerating part 202 from the dehumidifying part 201 in the rotary plate lower housing 501 and maintain a relative sealing therebetween. The lower housing dehumidifying region separator 501-2 (a dehumidifying part separator) is in a corresponding region of the dehumidifying part 201 of the rotary plate lower housing 501, is formed into a relatively large sector shape, and is configured to separate the region of the dehumidifying part 201 in the rotary plate lower housing 501 into at least two parts along the circumference of the rotary plate, such that the circulating airflow in the region of the dehumidifying part 201 can be separated. After entering the space of the dehumidifying rotary plate and the rotary plate under the housing 501, the circulating airflow from the circulating fan is divided into at least two portions via the dehumidifying part separator, thereby preventing affecting the moisture-absorbing efficiency caused by a situation in which the circulating airflow only acts on the larger diameter of the dehumidifying rotary plate and becomes rather small near the center of the circle due to the effect of a centrifugal force of the airflow.

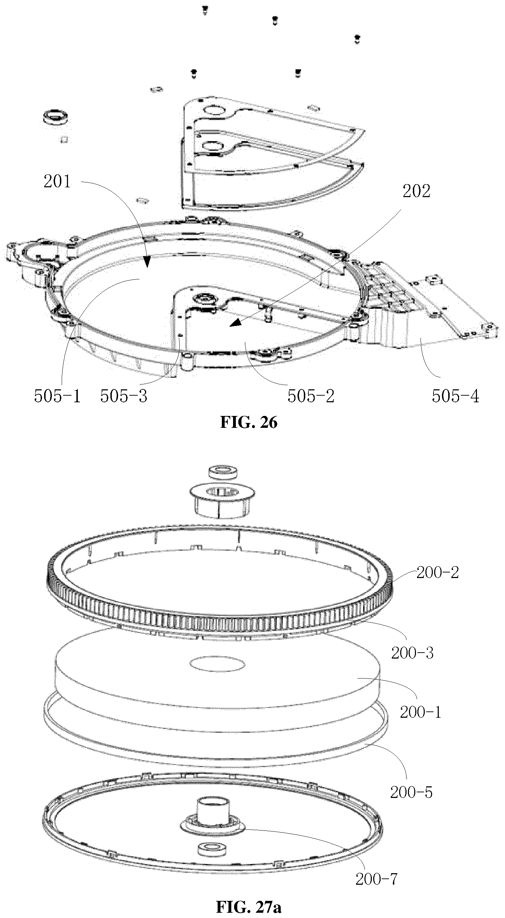

FIG. 26 is a schematic structural diagram of a rotary plate upper housing according to the present application.

The rotary plate upper housing 505 is formed into a disc shape corresponding to the dehumidifying rotary plate 200, and includes an upper housing dehumidifying region 505-1 (corresponding to the dehumidifying part 201 of the dehumidifying module assembly) and an upper housing regenerating region 505-2 (corresponding to the regenerating part 202 of the dehumidifying module assembly) separated from each other. The rotary plate upper housing 505 is provided with an upper housing regenerating region separator 505-3 for separating the upper housing dehumidifying region 505-1 (corresponding to the dehumidifying part 201 of the dehumidifying module assembly) and the upper housing regenerating region 505-2 and maintaining a relative sealing therebetween. In addition, a circulating air outlet 505-4 is provided at a circumferential outer side of the rotary plate upper housing 505, and is connected to the air outlet passage 203. The circulating air outlet 505-4 communicates the dehumidifying module assembly 20 and the drum A, and is configured to allow the dry circulating airflow as dehumidified to flow into the drum A and dry the clothes in the drum A.

In another embodiment, the lower housing regenerating region separator 501-1 and the upper housing regenerating region separator 505-3 are alternatively or both provided with a sealing member that can be spaced apart from or interfere with the rotary plate 200 to ensure air tightness between the dehumidifying part 201 and the regenerating part 202 during rotation of the rotary plate 200. For example, a sealing wool top may be fixedly provided on the lower housing regenerating region separator 501-1, and no sealing member is provided on the upper housing regenerating region separator 505-3, such that the sealing wool top can interfere with the rotary plate 200, and the end surface of the upper housing regenerating region separator 505-3 has a clearance of, for example, 0.2-5 mm from the rotary plate 200. Or, the sealing wool tops that interfere with the rotary plate 200 may be provided on both the lower housing regenerating region separator 501-1 and the upper housing regenerating region separator 505-3. Or, a sealing soft rubber or no sealing member is provided on both the lower housing regenerating region separator 501-1 and the upper housing regenerating region separator 505-3, but the clearance between the sealing soft rubber or the end surface of the separator and the rotary plate 200 shall be kept in the range of 0.2-5 mm to ensure the sealing as much as possible.

Referring to FIGs. 1 and 26, the upper housing regenerating region 505-2 of the rotary plate upper housing 505 is provided with a separated heating module 302, the body of the heating module 302 is provided separately from the rotary plate upper housing 505, and the lower end surface of the heating module 302 is communicated with the rotary plate upper housing 505 to form a convection space for the regenerated air. Preferably, the heating module 302 is provided in a disc plane where the rotary plate upper housing 505 is located to reduce the overall height of the dehumidifying module assembly 20. As shown in FIGs. 1 and 26, the rotary plate upper housing 505 is formed into a disc shape, with a small sector-shaped region accommodating the separated heating module 302. A heater air inlet 302-1 is provided at the periphery of the heating module 30 and is communicated with the regenerating fan 301, and is configured to receive dry regeneration air from the regenerating fan 301 and heat the air as a high-temperature and dry regeneration air. A heater air outlet 302-2 is provided on a lower end surface of the sector surface of the heating module 302, and is communicated with the rotary plate upper housing 50, and is configured to output the high-temperature and dry regeneration air to the regenerating part 202 of the dehumidifying rotary plate 200 to remove moisture in the dehumidifying rotary plate 200 in the region of the regenerating part 202.

The heating module 302 on the rotary plate upper housing 505 is communicated with the regenerating fan 301. The regeneration air enters the internal space of the heating module 302 via the heater air inlet 302-1 of the heating module 302, passes through the heater air outlet 302-2 and flows down to the heating module 302 for heating, and passes through the dehumidifying rotary plate 200 and then convects to circulate in a lower space of the dehumidifying rotary plate 200 (the space defined by the rotary plate lower housing 501), thereby drying and dehydrating the dehumidifying rotary plate in the region of the regenerating part 202.

In an optional embodiment, the regenerating fan air outlet is communicated with a side air inlet of the heating module 302, and configured for blowing in the regeneration airflow from a direction substantially perpendicular to the radius of the substantially sector-shaped heating module 302.

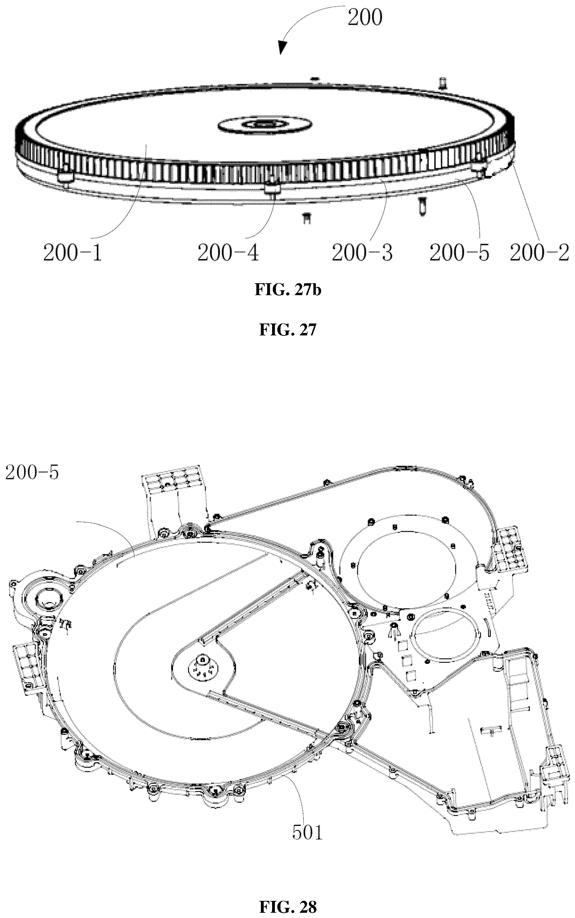

FIG. 27 is a schematic diagram of an internal structure of a dehumidifying rotary plate of a drying module assembly according to the present disclosure.

FIG. 27a is a schematic diagram of an exploded structure of the dehumidifying rotary plate, and FIG. 27b is a schematic diagram of an assembly structure of the dehumidifying rotary plate.

As shown in FIG. 27, the dehumidifying rotary plate 200 includes a molecular sieve 200-1, a driving wheel 200-2, an auxiliary rotating ring 200-3, and a sealing ring 200-5. The molecular sieve 200-1 is formed in the central region of the dehumidifying rotary plate 200, and the driving wheel 200-2, the auxiliary rotating ring 200-3 and the rotary plate sealing ring 200-5 are arranged in parallel at the periphery of the molecular sieve along the thickness direction of the molecular sieve 200-1.

The driving wheel 200-2 is provided to surround the molecular sieve 200-1, and drive teeth are formed on the outer side of its circumference, and configured for in transmission cooperation with the driving motor, such that the molecular sieve 200-1 can be driven to rotate by the motor.

The auxiliary rotating ring 200-3 is provided below the driving wheel 200-2 and surrounds the molecular sieve 200-1, and configured for being in contact with and rolling relative to the flexible roller 200-4 to assist the smooth rotation of the molecular sieve 200-1. Specifically, the auxiliary rotating ring 200-3 is configured to roll with at least one flexible roller 200-4 provided inside the rotary plate housing to assist the normal rotation of the dehumidifying rotary plate and reduce the friction.

Preferably, the dehumidifying module assembly 20 is further provided with at least one flexible roller 200-4. The flexible roller 200-4 is provided on the inner side of the rotary plate housing, and is in rolling contact with the auxiliary rotating ring 200-3 to assist the normal rotation of the dehumidifying rotary plate and reduce the friction. Preferably, the flexible roller 200-4 is flexible and deformable. Thus, when the dehumidifying rotary plate is displaced relative to a rotating shaft, the flexible roller 200-4 may be compressed to be deformed by the auxiliary rotating ring 200-3, and the pressure between the auxiliary rotating ring and the flexible roller 200-4 will cause no friction to the rotation of the rotary plate.

Optionally, a rotary plate detecting device may be provided at the position of the dehumidifying rotary plate, and is configured to monitor a rotating velocity of the dehumidifying rotary plate and send the same to the control device, so as to ensure the continuous rotation of the dehumidifying rotary plate during the drying work, thereby preventing the heating module from continuously heating one region and protecting the dehumidifying rotary plate from being burned down.

The rotary plate sealing ring 200-5 is provided below the auxiliary rotating ring 200-3 and surrounds the molecular sieve 200-1 to achieve a rotatable sealing between the dehumidifying rotary plate 200 and the rotary plate housing. The rotary plate sealing ring 200-5 may be formed by a soft deformable material, especially a material that is corrosion-resistant and not over-expanded by the water absorption, such as wool tops, foam and soft rubber. After the dehumidifying rotary plate 200 is mounted to the rotary plate housing, the size of the rotary plate sealing ring 200-5 is formed to have a certain space overlapping with the inner wall of the rotary plate housing, so as to realize the interference fit between the rotary plate sealing ring 200-5 and the inner wall of the rotary plate housing. Thus, a rotatable sealing contact can be achieved under the elastic deformation of the rotary plate sealing ring 200-5, such that the circulating airflow can be prevented from flowing through the gap between the dehumidifying rotary plate 200 and the rotary plate housing. Under this, most of the moist airflow from the drum of the washing machine can be dehumidified by passing through the dehumidifying rotary plate without leaking through the gap between the periphery of the dehumidifying rotary plate and the rotary plate housing.

The parallel sequence of the driving wheel 200-2, the auxiliary rotating ring 200-3, and the sealing ring 200-5 is optional. Since these three components realize different functions respectively, the specific sequence therebetween will not be limited as long as the three components are provided in parallel.

FIG. 28 is a schematic diagram of a structure where a sealing ring is provided in the rotary plate lower housing.

As shown in FIG. 28, in another optional embodiment, the rotary plate sealing ring 200-5 may also be fixedly provided on the rotary plate lower housing 501, and the size of the rotary plate sealing ring 200-5 is formed to have a certain space overlapping with the periphery of the dehumidifying rotary plate 200, so as to achieve the interference fit between the rotary plate sealing ring 200-5 and the periphery of the dehumidifying rotary plate 200. The specific reason is the same as above. In this case, the rotary plate sealing ring 200-5 is provided at the periphery of a conjunction point between the rotary plate lower housing 501 and the rotary plate upper housing 505, and is configured to, on the one hand, seal the conjunction point between the rotary plate upper and lower housings and, on the other hand, rotationally seal the dehumidifying rotary plate 200.

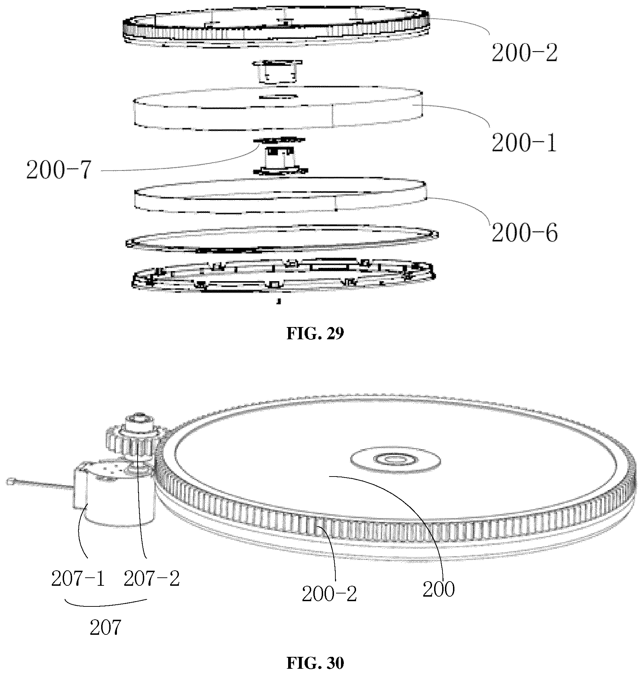

FIG. 29 is a schematic diagram of a vibration damping structure of the dehumidifying rotary plate.

As shown in FIG. 29, the material of the molecular sieve 200-1 of the dehumidifying rotary plate 200 is relatively fragile, and may be easily damaged during rotation due to vibration of the washing machine or collision with the housing. Therefore, in order to minimize the vibration of the molecular sieve 200-1 and avoid its vibration damage, it is required to perform vibration damping processing on the molecular sieve 200-1.

In the embodiments of the present disclosure, the vibration damping structure of the molecular sieve 200-1 includes a circumferential vibration damping member 200-6 and/or a central vibration damping member 200-7, which will be respectively described in detail below.

The circumferential vibration damping member 200-6 is formed by a flexible material such as foam, is provided between the molecular sieve 200-1 and the driving wheel 200-2, and surrounds the periphery of the molecular sieve 200-1, such that a cushion is formed between the outer ring of the molecular sieve 200-1 and the inner ring of the rotary plate lower housing 501 and the rotary plate upper housing 505, and the molecular sieve is prevented from colliding with the housing during the rotation.

Referring to FIG. 29, the dehumidifying rotary plate 200 has a central hole that correspondingly sleeves the rotating shaft 501-3 in the center of the rotary plate lower housing 501, and rotates by taking the rotating shaft as the center shaft.

The central vibration dampening member 200-7 is formed as a circular ring, is provided between the molecular sieve 200-1 and the rotary plate lower housing 501, and sleeves the rotating shaft 501-3 of the rotary plate lower housing 501 to form a vibration cushion between the molecular sieve 200-1 and the rotary plate lower housing 501. In general, the rotary plate lower housing 501 is directly connected (rigidly or flexibly) to the frame of the washing machine, and the vibration of the washing machine is easily transmitted to the rotary plate lower housing 501. Therefore, the above central vibration dampening member 200-7 can effectively cushion the damages caused by the vibration from the rotary plate lower housing 501 to the molecular sieve 200-1 and can further enhance the clamping and fixing effect.

It should be noted that the circumferential damping and/or end surface damping of the molecular sieve 200-1 is not necessarily provided simultaneously, and only one of the vibration damping structures is enough if the one damping structure can provide the desired vibration damping effect.

The molecular sieve 200-1 of the dehumidifying rotary plate 200 is formed by a moisture-absorbing material, and properties of the material such as moisture adsorption, moisture evaporation, sterilization, and mechanical stability need to be considered comprehensively. Optionally, the molecular sieve 200-1 of the present disclosure can be selected from one of the following materials: lithium chloride, silica gel, modified silica gel, zeolite, active alumina, 13X (sodium X type) molecular sieve, and the like.

The properties of each of the above materials are as follows.

### a. Lithium chloride

Advantages: 1. Having a high adsorption capacity; 2. Having a good dehumidifying effect; 3. Having a low energy consumption in regeneration; and 4. Having a good sterilization effect. Disadvantages: 1. Causing corrosion to surrounding equipment due to the leakage of liquid; and 2. Having a poor dehumidifying capacity under a low humidity situation.

### b. Silica gel

Advantage: Having a good stability in the adsorbing process.

Disadvantages: 1. Having a poor thermal stability; 2. Requiring an improvement in adsorption capacity; and 3. Having a poor mechanical stability.

### c. Modified silica gel

Advantage: Having an improved adsorption property and thermal stability. Disadvantages: Having a complex process, and being expensive.

### d. Zeolite

Advantages: 1. Having good adsorption performance at high and low temperatures; and 2. Having a good thermal stability.

Disadvantages: 1. Having a low adsorbing capacity under conventional conditions; and 2. Having high energy consumption in regeneration.

### e. Active alumina

Advantage: Having a moderate regenerating rate. Disadvantage: Having a poor adsorbing capacity.

### f. 13X (sodium X type) molecular sieve

Advantages: Having a good water-absorbing quality. Disadvantage: Having poor desorption performance.

In the embodiments of the present disclosure, the dehumidifying module assembly 20 is further provided with a driving device. The driving device includes a driving motor and a transmission component, and is configured to drive the dehumidifying rotary plate 200 to rotate.

The driving device 207 may be classified into a peripheral driving device 207 or a central driving device 208 according to the difference in the set positions and driving modes, which will be described in detail below.

FIG. 30 is a schematic structural diagram of a peripheral driving device for the dehumidifying rotary plate according to an embodiment of the present disclosure.

As shown in FIG. 30, the peripheral driving device 207 includes a peripheral driving motor 207-1 and a peripheral transmission gear 207-2. The peripheral driving device 207 is rotatably provided at the periphery of the dehumidifying rotary plate 200, and is configured to drive the dehumidifying rotary plate 200 to rotate in a peripheral driving mode.

In the case of the peripheral driving mode, a gear-like driving wheel 200-2 sleeves the periphery of the dehumidifying rotary plate 200, and a peripheral transmission gear 207-2 preferably sleeves a power shaft of the peripheral driving motor 207-1 and is provided to rotatably engage with a gear of the driving wheel 200-2, so as to drive the dehumidifying rotary plate 200 to rotate under the drive of the peripheral driving motor 207-1.

Optionally, instead of a direct contact connection, the driving motor 207-1, the peripheral transmission gear 207-2, and the driving wheel 200-2 may be in transmission connection with each other by a drive belt such as a gear rack, a pulley belt and the like.

The central driving device 208 (not shown) is rotatably provided in the center of the dehumidifying rotary plate 200, and is configured to drive the dehumidifying rotary plate 200 to rotate in a center-driving manner. The central driving device 208 includes a central driving motor 208-1 and a central transmission shaft 208-2.

In the case of the central driving mode, the periphery of the dehumidifying rotary plate 200 may be provided with no gear-like driving wheel 200-2, but the central transmission shaft 208-2 is fixedly connected to the center of the dehumidifying rotary plate 200 and driven by the central driving motor 208-1 to thereby drive the dehumidifying rotary plate 200 to rotate. Optionally, an external gear may be fixedly provided on the central transmission shaft 208-2, and an internal gear may be provided in a center hole of the dehumidifying rotary plate 200. The internal and external gears are engaged with each other closely to enable the central driving motor 208-1 to drive the dehumidifying rotary plate 200 through the central transmission shaft 208-2.

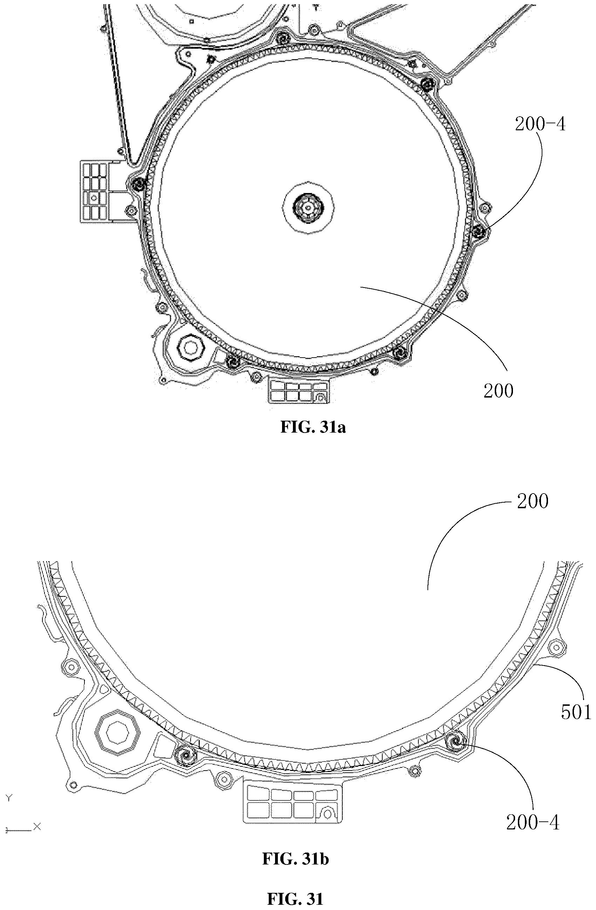

FIG. 31 is a schematic structural diagram of a flexible roller of the dehumidifying module assembly according to an embodiment of the present disclosure.

Referring to FIGs. 31a and 31b, at least one flexible roller 200-4 is provided along the periphery of the dehumidifying rotary plate 200 to assist the normal motion (rotation or movement) of the dehumidifying rotary plate and reduce friction. Preferably, the flexible roller 200-4 is provided on the inner side of the rotary plate housing and is in rolling contact with the auxiliary rotating ring 200-3. For example, the flexible roller 200-4 may be provided on an outward protruding mounting part on the inner ring of the rotary plate lower housing 501. A plurality of flexible rollers 200-4 is arranged on the inner wall surface of the rotary plate housing, and the dehumidifying rotary plate 200 is in direct contact with the plurality of flexible rollers 200-4, which can avoid the position of the dehumidifying rotary plate 200 from being displaced too much during the motion.

Preferably, the flexible roller 200-4 is formed to be flexible and deformable. Thus, when the dehumidifying rotary plate is displaced relative to the rotating shaft or a moving track, the flexible roller 200-4 may be compressed to be deformed by the auxiliary rotating ring 200-3, and the pressure between the auxiliary rotating ring 200-3 and the flexible roller 200-4 will cause no friction to the rotation of the rotary plate. The flexible roller 200-4 has a variable diameter, or the rotating center position of the flexible roller 200-4 can be adjusted, such that the distance from the contact point between the flexible roller 200-4 and the rotary plate housing to the rotating center of the dehumidifying rotary plate 200 can be adjusted.

In this way, when the flexible roller 200-4 is squeezed with the rotary plate housing, the distance between the squeezing point and the rotating shaft of the flexible roller 200-4 is variable. On the one hand, sliding friction between the dehumidifying rotary plate 200 as a whole and the inner ring of the rotary plate housing during the motion can be eliminated. On the other hand, the variable diameter of the flexible roller 200-4 can reduce the collision impact between the dehumidifying rotary plate 200 in uneven rotation and the inner ring of the rotary plate housing, thereby lessening the impact on and damages to the dehumidifying rotary plate 200.

The number of the flexible rollers 200-4 is preferably six, which are evenly distributed along the periphery of the dehumidifying rotary plate 200. The present disclosure is not limited to this, and other numbers are available according to actual needs.

In another optional embodiment, roller tracks or track slots (not shown) can be provided on the rotary plate housing no matter whether the flexible rollers 200-4 are provided or not. The track slot may restrict the dehumidifying rotary plate 200 in either the center or all surrounding directions, which allows the dehumidifying rotary plate 200 to be more stably kept in a preset position.

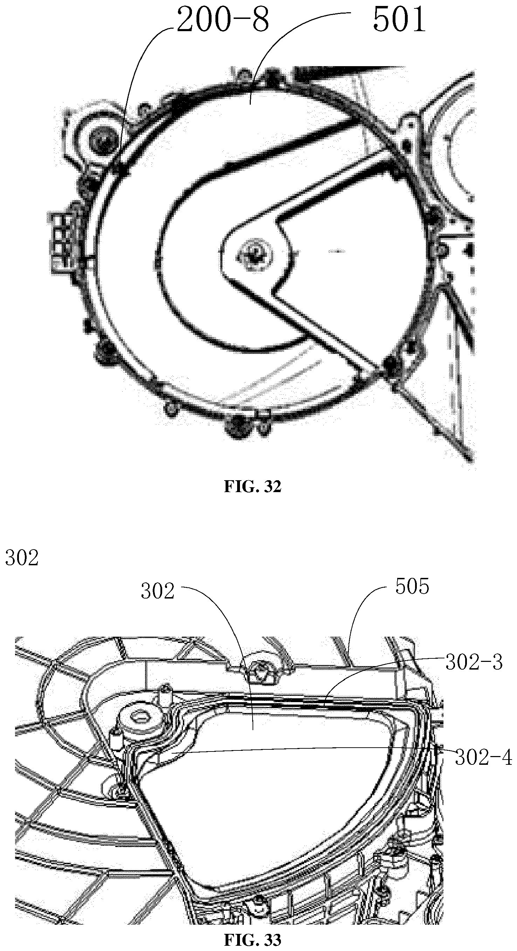

FIG. 32 is a schematic structural diagram of an auxiliary roller of a dehumidifying module assembly according to an embodiment of the present disclosure.

As shown in FIG. 32, at the outermost edge of the bottom surface inside the rotary plate lower housing 501, one or more auxiliary rollers 200-8 are further provided between the rotary plate lower housing 501 and the dehumidifying rotary plate 200 to eliminate friction between the dehumidifying rotary plate 200 and the rotary plate lower housing 501 during the motion of the dehumidifying rotary plate 200.

Preferably, the auxiliary roller 200-8 is formed as a non-deformable rigid roller with a constant diameter during the motion.

FIG. 33 is a schematic diagram of a sealing structure of a heating module of a drying module assembly according to the present disclosure.

As shown in FIG. 33, the heating module 302 is provided in the upper housing regenerating region 505-2 of the rotary plate upper housing 505 and is provided separately from the rotary plate upper housing 505.

Preferably, the heating module 302 is hermetically isolated from the rotary plate upper housing 505 with a thermal insulating material. Specifically, a first sealing member 302-3 is provided between the heating module 302 and the rotary plate upper housing 505, and is provided along an external contour of the heating module 302. The first sealing member 302-3 is preferably formed by a thermal insulating or adiabatic material for isolating the heat transfer between the heating module 302 and the rotary plate upper housing 505.

Optionally, a second sealing member 302-4 is further provided on the first sealing member 302-3 to achieve the thermal insulating and collision cushioning between the heating module 302 and the rotary plate upper housing 505. Preferably, the second sealing member 302-4 is made of a variable gel material such as foam, silicone or soft rubber, covers the first sealing member 302-3, and is provided along an external contour of the heating module 302 to achieve fixing and thermal insulating as well as cushioning the contact collision between the heating module 302 and the rotary plate upper housing 505.

Due to the high temperature of the heating module, the rotary plate upper housing 505 may be deformed or scalded over time if the heating module is in direct contact with the rotary plate upper housing 505. A temperature transfer cushion region is formed by providing the first sealing member 302-3 and the second sealing member 302-4 between the rotary plate upper housing 505 and the heating module 302.

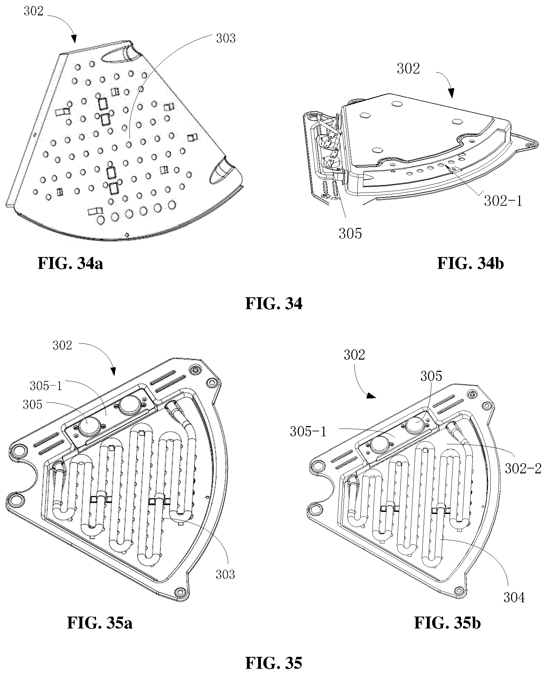

FIG. 34 is a schematic structural diagram of a mesh plate of a heating module of a drying module assembly according to the present disclosure. FIG. 34a is a schematic structural diagram of a mesh plate serving as an air outlet of the heating module, and FIG. 34b is a schematic structural diagram of an air inlet of the heating module.

As shown in FIG. 34, the rotary plate upper housing 505 is formed into a disc shape, with a small sector-shaped region accommodating the separated heating module 302. A heater air inlet 302-1 is provided at the periphery of the heating module 30 and is communicated with the regenerating fan 301 to receive a dry regeneration air from the regenerating fan 301 and heat the air as a high-temperature and dry regeneration air. A heater air outlet 302-2 is provided on a lower end surface of the sector surface of the heating module 302, and is communicated with the rotary plate upper housing 505 to output the high-temperature and dry regeneration air to the regenerating part 202 of the dehumidifying rotary plate 200, such that the regeneration air passes through the dehumidifying rotary plate 200 and convects to circulate in a lower space of the dehumidifying rotary plate 200 (the space defined by the rotary plate lower housing 501), thereby drying and dehydrating the dehumidifying rotary plate in the region of the regenerating part 202.

In this optional embodiment, the heating module 302 is of a sector structure and includes a space formed by the upper and lower walls and two side walls along the radius direction. The heating module 302 includes a mesh plate 303 provided at the heater air outlet 302-2, a heater 304 disposed below the mesh plate 303, and a thermostat 305 extending outward from one of the side walls of the lower wall.

The heating module 302 is communicated with the regenerating fan 301. The regeneration air enters the internal space of the heating module 302 via the heater air inlet 302-1 of the heating module 302, flows through the mesh plate 303 via the heater air outlet 302-2, then flows downward through the heater 304 via the air holes in the mesh plate 303, and finally flows to the rotary plate part of the regenerating part after being heated by the heater 304, thereby achieving the effect of heating and dehydrating the rotary plate part of the regenerating part.

Preferably, the arrangement of the plurality of air holes in the mesh plate 303 may have the same shape as the heater 304, such that most or all of the air passing through the mesh plate 303 can pass through the heater 304, thereby avoiding the occurrence of unheated air that reduces the efficiency of the heating module.

The diameters of the plurality of air holes in the mesh plate 303 preferably gradually become smaller or tend to become smaller along the periphery of the heating module 302 toward the center of the heating module 302. Because when the regeneration air enters via the heater air inlet 302-1 at the periphery of the heating module 302, the air holes having a larger diameter can facilitate the passing of the regeneration air having a relatively high air velocity; whereas the regeneration air may have a lower air velocity since the space of the heating module 302 gradually becomes narrower at the position close to the center of the heating module 302, and the air holes having a smaller diameter can allow the regeneration air to pass through the air holes as much as possible.

FIG. 35 is a schematic structural diagram of a heater of a heating module of a drying module assembly according to the present disclosure; where FIG. 35a is a schematic diagram of relative positions of the heater and the mesh plate, and FIG. 35b is a schematic diagram of a layout structure of the heater.

As shown in FIG. 35, the heater 304 is provided in the air outlet path of the air holes in the mesh plate 303, and substantially covers most or all of the air holes. Further, the heater is provided at a predetermined distance from the mesh plate, and is namely disposed close to the mesh plate 303, such that the air flowing out of the air holes can be heated evenly and the heater does not create excessive resistance to the air passing through the air holes.

Preferably, the heater 304 is provided directly below the air holes and slightly offsets toward the radius extending direction of the heating module. When the air flows inward along the radius of the heating module and passes through the air holes, the air may have a certain velocity toward the radius direction indicated by the arrow. Thus, a little offset will allow the air passing through the air holes to face toward the heater, thereby improving the heating efficiency of airflow by the heater.

As shown in FIG. 35b, a thermostat mounting part is provided to extend outward from one of the side walls of the heating module 302, and a thermostat 305 is mounted in the thermostat mounting part to monitor the temperature of the heater or the temperature of the airflow flowing out of the mesh plate 17.

Preferably, a heat-conducting sheet 305-1 is provided on the thermostat mounting part. The thermostat 305 is then provided inside the heat-conducting sheet, which means that the heat-conducting sheet 305-1 wraps around the thermostat 305 to conduct the temperature of the heater to the heat-conducting sheet 305-1 first by means of heat conduction, such that the thermostat 305 can directly detect the temperature of the heat-conducting sheet 305-1 and the air temperature inside the heating module can be monitored stably. Advantageously, the air carrying heat forms an eddy or turbulent flow in the space of the heating module, which causes the region to have an unstable temperature. Thus, if no heat-conducting sheet 305-1 is provided, the temperature detected by the thermostat 305 will be dynamic and very unstable, which is not conducive to effective control of the heater 304.

Optionally, the thermostat 305 is connected to a control device, and heating power and duration of the heater, the rotating velocity of the regenerating fan and the dehumidifying rotary plate and the like are controlled via the control device, such that a precise temperature control can be achieved during a heating starting period and a temperature keeping period.

Referring to FIG. 1, a condensing module assembly 40 is provided at the downstream of the regenerating module assembly 30 of the drying device B. The regeneration air outlet 3012 of the regenerating module assembly 30 is communicated with the condenser air inlet 405 of the condensing module assembly 40 to input the high-temperature and high-humidity regeneration airflow output from the regeneration air outlet 3012 into the condenser 401 for condensing it into a low-temperature and dry airflow. Then, the low-temperature and dry airflow is discharged to the atmosphere via the condenser air outlet 406 of the condensing module assembly 40 to avoid adverse effects on the atmospheric temperature and humidity of the space where the integrated washer-dryer is located. Or, preferably, the condenser air outlet 406 of the condensing module assembly 40 is communicated with the regeneration air inlet 3011 of the regenerating module assembly 30 to deliver the generated low-temperature and dry airflow to the regenerating fan 301, such that the airflow can enter the regenerating module assembly 30 again for regenerating and circulating.

FIG. 1 further shows a cooling water inlet 401-1, a cooling water outlet 401-2, and a condensate water outlet 401-3 of the condenser 401. The cooling water inlet 401-1 is connected to an external cold water source, and the cooling water outlet 401-2 is optionally communicated with the water outlet of the drum. The cooling water inlet 401-1 and cooling water outlet 401-2 cooperate with each other to provide the cooling water for condensation to a condenser pipeline and discharged the water from the condenser pipeline. The condensate water outlet 401-3 is configured to condense the water in the moisture desorbed from the dehumidifying rotary plate into liquid water and discharge the liquid water from the condenser housing.

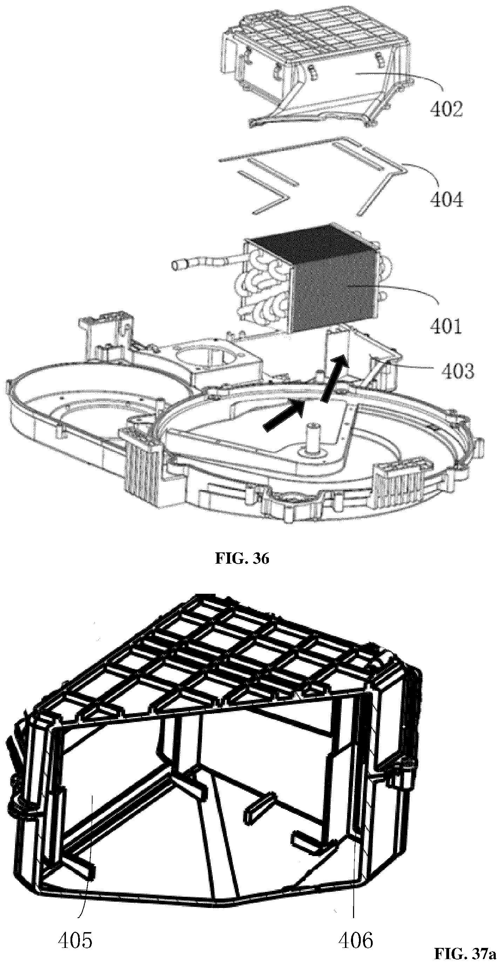

FIG. 36 is a schematic diagram of a housing of a condensing module assembly of the drying device according to the present disclosure.

As shown in FIG. 36, the condensing module assembly includes a condenser 401, a condenser upper housing 402, a condenser lower housing 403, and, preferably, a sealing member 404. The condenser fits into the lower condenser housing 403 by means of retaining bars and limiters, and the condenser upper housing squeezes down the sealing members 404 around the condenser to achieve a sealing effect. Optionally, a recess is provided on the condenser upper housing 402 or the condenser lower housing 403 (e.g., on the condenser lower housing 403), and the other housing is provided with a projection. The recess may accommodate the sealing member 404 (e.g., a sealing gasket), and the sealing is achieved by pressing the projection into the recess.

In FIG. 36, as shown by the arrows, the high-temperature and high-humidity airflow (whose moisture has been desorbed from the dehumidifying rotary plate after being heated by the heater) from the regenerating part flows along the arrows from the space between the lower surface of the dehumidifying rotary plate and the lower housing of the dehumidifying rotary plate to the condenser housing, so as to be condensed and de-watered.

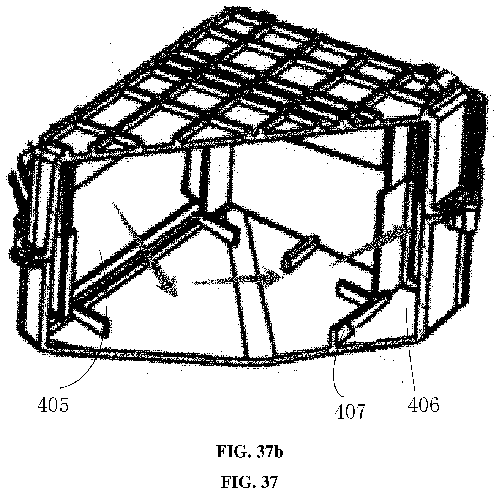

FIG. 37 is a schematic diagram of a flow spoiling member of a condenser according to a preferred embodiment, where FIG. 37a is a housing structure of a condenser having no flow spoiling member, and FIG. 37b is a housing structure of a condenser having the flow spoiling member.

Referring to FIG. 37a, in the housing of the condenser having no flow spoiling member, the air flowing direction of the condensing cycle is as follows. The high-temperature and high-humidity air enters the condensing region where the condenser 401 is located from the condenser air inlet 405, becomes the dry air after being condensed and dehumidified, and then flows out of the condenser via the condenser air outlet 406. When there is no flow spoiling member, part of the moist air may flow directly from the bottom of the condenser to the condenser air outlet 406 without passing through the condenser 401. As a result, this part of the moist air fails to be condensed, thereby causing a poor condensing and drying effect.

To solve this problem, referring to FIG. 37b, one or more flow spoiling members 407, such as baffles, bumps, or any other member shapes that can change the traveling direction of the condensing air, are provided within the condenser housing (upper and/or lower housing) along the traveling direction of the condensing air, and are configured to spoil the moist airflow flowing through the condenser, such that the moist airflow is in full contact with the condenser, thereby preventing the moist airflow from directly flowing out of the condensing module assembly without passing through the condenser. In the embodiments of the present disclosure, the flow spoiling member 407 may also be provided at one or both sides of the traveling direction of the condensing air.

In another optional embodiment of the present disclosure, in addition to providing a condensing module assembly 40 at the downstream of the regeneration cycle, it is possible to provide a pre-condensing module assembly between the air outlet of the drum and the dehumidifying rotary plate (e.g., in the air inlet passage 102) to condense the hot and moist airflow having a relatively high temperature once to reduce the water content. Then, the moisture-absorbing processing is preformed again after the airflow enters the dehumidifying rotary plate.

Optionally, the pre-condensing module assembly may be formed as a separate condensing module assembly, and its condenser air inlet and condenser air outlet are communicated with the air outlet of the drum and the air inlet of the circulating fan, respectively.

In another embodiment, the pre-condensing module assembly may be in a structure of a condensing sleeve. The condensing sleeve envelopes the air outlet pipe of the drum, such that a water flow space can be formed between the outer wall of the air outlet pipe of the drum and the inner wall of the condensing sleeve. The pipe wall is kept at a continuous low temperature by slowly spraying water onto the outer wall of the air outlet pipe of the drum via the above condensing nozzle, thereby enabling the hot and moist air flowing through the pipe to be condensed into water. The cooling water in the condensing sleeve may flow to the outer tub of the drum or to a water outlet pipe of the washing machine.

It should be understood that the specific embodiments of the present application are only for exemplary illustration or explanation of the principles of the present application, and do not constitute a limitation to the present application. Therefore, any modification, equivalent replacement, improvement, and the like as made without deviating from the spirit and scope of the present application shall be regarded as within the protection scope of the present application. In addition, the claims appended to the present application are intended to cover all variations and modifications that fall within the scope and boundaries of the appended claims, or the equivalent form of such scope and boundaries.

## Claims

1. A drying device of an integrated washer-dryer, comprising:
a circulating module assembly (10), communicated with a drum of the integrated washer-dryer and configured to enable moist air from the drum to form a circulating airflow by rotating and output the circulating airflow to a dehumidifying module assembly (20) for dehumidification;
the dehumidifying module assembly (20), communicated with the circulating module assembly (10) and the drum and configured to dehumidify and dry the circulating airflow from the circulating module assembly (10) by circulating movement and output the dried circulating airflow to the drum; and
a regenerating module assembly (30), communicated with the dehumidifying module assembly (20) and configured to output a dry regeneration airflow to the dehumidifying module assembly (20) to dehumidify and dry at least part of the dehumidifying module assembly (20) so as to restore a dehumidifying capacity of the dehumidifying module assembly (20),
wherein the circulating module assembly (10), the dehumidifying module assembly (20) and the regenerating module assembly (30) of the drying device are disposed substantially in one plane.

2. The drying device according to claim 1, wherein a plane where the drying device is located is disposed horizontally above or below the drum and is parallel to a rotating shaft of the drum.

3. The drying device according to claim 2, wherein rotating shafts of at least two of the circulating module assembly (10), the dehumidifying module assembly (20) and the regenerating module assembly (30) of the drying device are parallel to each other and are substantially perpendicular to the rotating shaft of the drum.

4. The drying device according to claim 3, wherein
the rotating shafts of the circulating module assembly (10) and the dehumidifying module assembly (20) are configured to be heteroplanar with and perpendicular to the rotating shaft of the drum, and distributed on two sides of the rotating shaft of the drum; and
the regenerating module assembly (30) is provided on a side of the circulating module assembly (10), and the regenerating module assembly (30) and the dehumidifying module assembly (20) are disposed on two sides of the rotating shaft of the drum, respectively.

5. The drying device according to any one of claims 1 to 4, further comprising: an air inlet passage (102) which is communicated with the circulating module assembly (10) and the drum and serves as a passage allowing the moist air from the drum to enter the circulating module assembly (10).

6. The drying device according to claim 5, wherein when a plane where the drying device is located is disposed horizontally above the drum, the air inlet passage (102) is disposed at a left rear side or right rear side of the drum, and the circulating module assembly (10) communicated with the air inlet passage (102) is accordingly disposed at an upper left rear side or upper right rear side of the drum.

7. The drying device according to any one of claims 1 to 4, further comprising: an air outlet passage (203) which is communicated with the dehumidifying module assembly (20) and the drum and serves as a passage allowing the dried circulating airflow as dehumidified to enter the drum.

8. The drying device according to claim 5, wherein when a plane where the drying device is located is disposed horizontally below the drum, the air inlet passage (102) is configured to extend sequentially along a bottom, a rear and a top of the integrated washer-dryer, so as to communicate an air outlet of the drum with an air inlet of a circulating fan (101).

9. The drying device according to claim 7, wherein when a plane where the drying device is located is disposed horizontally below the drum, the air outlet passage (203) is configured to extend along a bottom, a rear and a top of the integrated washer-dryer, so as to communicate an air outlet of the dehumidifying module assembly (20) with an air inlet of the drum.

10. The drying device according to claim 1, wherein a plane where the drying device is located is disposed vertically behind the drum and is perpendicular to a rotating shaft of the drum.

11. The drying device according to claim 10, wherein
rotating shafts of the circulating module assembly (10) and the dehumidifying module assembly (20) are parallel to the rotating shaft of the drum and are distributed on two sides of the rotating shaft of the drum; and
the regenerating module assembly (30) is provided on a side of the circulating module assembly (10), and the regenerating module assembly (30) and the dehumidifying module assembly (20) are disposed on two sides of the rotating shaft of the drum, respectively.

12. The drying device according to claim 10 or 11, further comprising: an air inlet passage (102) which is configured to extend in a direction perpendicular to the rotating shaft of the drum, communicate an air outlet of the drum with an air inlet of the circulating module assembly (10) and serve as a passage allowing the moist air from the drum to enter the circulating module assembly (10).

13. The drying device according to claim 10 or 11, further comprising: an air outlet passage (203) which is configured to extend in a direction parallel to the rotating shaft of the drum, communicate an air outlet of the dehumidifying module assembly (20) with an air inlet of the drum and serve as a passage allowing the dried circulating airflow as dehumidified to enter the drum.

14. The drying device according to any one of claims 1 to 13, wherein a regeneration air inlet (3011) and a regeneration air outlet (3012) of the regenerating module assembly (30) are both communicated with an atmosphere.

15. The drying device according to any one of claims 1 to 13, further comprising:
a condensing module assembly (40), communicated with a regeneration air outlet of the regenerating module assembly (30) and configured to condense the regeneration airflow output from the regenerating module assembly (30) to form a low-temperature and dry airflow.

16. The drying device according to claim 15, wherein an air outlet of the condensing module assembly (40) is communicated with an atmosphere or a regeneration air inlet (3011) of the regenerating module assembly (30).

17. The drying device according to any one of claims 5, 6, 8, 12 and 13, further comprising:
a filtering assembly (60), provided in the air inlet passage (102) of the circulating module assembly (10) and configured to filter lint and/or impurities in the airflow from the drum.

18. The drying device according to claim 17, wherein the air inlet passage (102) is configured to pass through a front end of the integrated washer-dryer, and the filtering assembly (60) provided in the air inlet passage (102) is detachably provided on a front-end panel of the integrated washer-dryer.

19. The drying device according to any one of claims 1 to 18, wherein a housing of the drying device is integrally provided with at least one mounting part (509) at corresponding positions on four sides of a frame of the integrated washer-dryer, respectively, and the drying device is rigidly fixed to a cabinet of the integrated washer-dryer via the mounting parts (509).

20. The drying device according to any one of claims 1 to 19, wherein a housing of the drying device is flexibly connected to the drum of the integrated washer-dryer.

21. The drying device according to claim 20, wherein at least one of following component connections adopts a flexible connection: a connection between the circulating module assembly (10) and the air inlet passage (102) of the drying device, and/or a connection between the air inlet passage (102) and the drum, and/or a connection between the dehumidifying module assembly (20) and the circulating module assembly (10), and/or a connection between the dehumidifying module assembly (20) and the air outlet passage (203) of the drying device, and/or a connection between the air outlet passage (203) and the drum.

22. The drying device according to any one of claims 1 to 21, wherein the drying device is provided with a packaging housing (50), and the packaging housing comprises:
a lower housing comprising: a rotary plate lower housing (501) for housing the dehumidifying module assembly (20), a circulating fan lower housing (502) for housing the circulating module assembly (10), a condensing lower housing (503) for housing the condensing module assembly (40), and a regenerating lower housing (504) for housing the regenerating module assembly (30); and
an upper housing comprising: a rotary plate upper housing (505) for housing the dehumidifying module assembly (20), a circulating fan upper housing (506) for housing the circulating module assembly (10), and a condensing upper housing (507) for housing the condensing module assembly (40),
wherein the respective lower housings are integrally formed as an integral lower housing or separately formed as a plurality of separate lower housing parts, and
the respective upper housings are formed as a plurality of separate upper housing parts.

23. The drying device according to claim 22, wherein
the rotary plate lower housing (501) is fixedly and rigidly connected to a frame of a washing machine, and at least one of the other lower housings is fixedly and rigidly connected to an outer tub of the drum separately or integrally.

24. The drying device according to claim 21 or 23, wherein the rotary plate lower housing (501) is flexibly connected to all vibration-generating components.

25. An integrated washer-dryer, comprising: a drum for washing, and the drying device according to any one of claims 1 to 24, wherein the drying device is communicated with the drum for dehumidifying and drying moist air inside the drum.
